# EUROPEAN PATENT SPECIFICATION

(11) **EP 4 129 873 B1**
(45) Date of publication and mention of the grant of the patent: **16.09.2026**
(21) Application number: 21774302.0
(22) Date of filing: 15.03.2021
(51) Int. Cl.: G06Q 10/08, B65G 61/00, B65D 85/66, B65G 1/137, G05B 19/418

(54) **COLLAPSABLE FRAME MANAGEMENT SYSTEM, INFORMATION TERMINAL, AND PROGRAM**
VERWALTUNGSSYSTEM FÜR ZUSAMMENKLAPPBARE RAHMEN, INFORMATIONSENDGERÄT UND PROGRAMM
SYSTÈME DE GESTION DE CADRE PLIABLE, TERMINAL D'INFORMATIONS ET PROGRAMME

(30) Priority: 24.03.2020 JP 2020052603
(43) Date of publication of application: 08.02.2023
(73) Proprietor: Mitsui O.S.K. Lines, Ltd., Tokyo 105-8688 (JP)
(72) Inventor: ASAI Ryokichi, Tokyo 105-8688 (JP); MIURA Terusada, Tokyo 104-0031 (JP); HORIGA Tsuyoshi, Tokyo 104-0031 (JP)
(74) Representative: WSL Patentanwälte Partnerschaft mbB
(86) International application number: PCT/JP2021/010293
(87) International publication number: WO 2021/193181

(56) References cited:
- WO-A1-2019/106869
- WO-A1-2019/106869
- JP-A- 2002 104 625
- JP-A- 2007 011 424
- JP-A- H10 222 568
- US-A1- 2011 061 572
- US-B1- 8 442 876
- US-B1- 8 442 876
- US-B1- 8 935 286

## Description

### [TECHNICAL FIELD]

The present invention relates to an assemblable mount management system, an information terminal, and a program that causes a computer to operate as an assemblable mount management system or an information terminal.

### [BACKGROUND ART]

In the transport of a coiled object being a plate material rolled up into a cylindrical shape, such as a coiled steel sheet, the coiled object is set on a mount called a coil mount, and the coil mount is loaded in a transport container and conveyed. In this way, the coil mount absorbs the vibration during the transport and may therefore prevent damage to the coiled object.

Conventional coil mounts generally have a disposable structure formed by fixing wooden members with screws or nails. Such coil mounts have environmental impact and disposal cost issues.

Also, with this structure, each time a coiled object is transported, it is necessary to perform operations of making a plurality of parts by cutting wood with strength suitable for the transport target and assembling the made parts into a structure suitable for the transport target. However, one must be a skilled person with sufficient experience in manufacturing coil mounts to perform these operations. Hence, having a skilled person manufacture disposable products is also an issue in terms of productivity.

Thus, to make a coil mount repetitively usable, the applicant has proposed an assemblable mount which can be disassembled into a plurality of parts and is excellent as an assemblable type (Patent Literature 1). With this structure, when a coiled object is transported, the assemblable mount can be manufactured by simply assembling premanufactured parts, and therefore one does not have to be a skilled person to assemble the assemblable mount. Also, after the transport of the coiled object is completed, the assemblable mount may be disassembled, thereby occupying less space, loaded into a container, and returned. In this way, the assemblable mount can be used as what is called a returnable holder which can be repetitively used.

On the other hand, to repetitively use the returnable holder, it is necessary to track and manage it. Moreover, in the case of exporting and importing a conveyed coil, customs clearance is required also for the assemblable mount, which is a returnable holder.

A management system for tracking, management, and customs clearance of a returnable holder is publicly known (Patent Literature 2). Further, a computerized system and method for managing a returnable container inventory and repairs of the returnable containers is known from Patent Literature 3. The computerized system and method has features and functionality for tracking and managing repairs of special returnable containers that comprise multiple parts. The computerized system and method supports tracking of containers through a distribution network and management of data related to repairs performed on returnable containers as well as the spare parts that are used to repair the containers.

In Patent Literature 4 a knockdown frame for transmitting the weight of a to-be-transported object to a floor surface by weight supporting members each of which is a plate surface-shaped member and supports the lower surface and one lateral surface of the to-be-transported object, and a base member and plate-shaped first coupling members that are disposed at the lower sides of the weight supporting members is described. The weight supporting members have gaps therebetween in the longitudinal direction of the to-be-transported object by engagement with the base member and the coupling members, and are fixed to be erected on the floor surface.

Here, the parts of the assemblable mount differ in dimension, shape, and material. Hence, the manufacturer of each part may be different. Also, a contractor having received an order for transport of a coiled object often outsources operations to carriers. In this case, the administrator responsible for management of the assemblable mount varies from one outsourced operation to another.

Hence, if an accident that damages the coiled object occurs during the transport, it is necessary to clarify the part(s) which caused the damage, the time point at which an inappropriate operation causing the damage was performed, and the management administrator at that time point, in order to prevent a recurrence of the accident.

However, the management system of Patent Literature 2 only tracks the returnable holder during the product transport and return. Hence, if the transport target gets damaged during the transport, it is impossible to figure out the part(s) which caused the damage, the time point at which an inappropriate operation was performed, or the management administrator at that time point. This makes it impossible to take sufficient measures to prevent a recurrence of the accident.

### [CITATION LIST]

### [PATENT LITERATURES]

[Patent Literature 1] Japanese patent application Kokai publication No. 2017-95152
[Patent Literature 2] Japanese patent application Kokai publication No. 2003-312846
[Patent Literature 3] US Patent No. 8 442 876 B1
[Patent Literature 4] International patent application No. 2019/106869 A1

### [SUMMARY OF INVENTION]

### [TECHNICAL PROBLEM]

The present invention has been made in view of the above circumstances, and an object thereof is to provide an assemblable mount management system which, if an accident occurs during conveyance of a coiled object using an assemblable mount, can easily specify the cause of the accident.

### [SOLUTION TO PROBLEM]

To achieve the above object, one aspect of the present invention is an assemblable mount management system that is for use in management of repetitively used assemblable mounts in a physical distribution in which coiled objects are mounted on the assemblable mounts, housed in transport containers, and transported, and that is connected to an information terminal through a network, characterized in that the assemblable mount management system comprises: a storage unit storing parts management information including progress information indicating ongoing and completed management target steps among a plurality of management target steps which are pre-defined steps starting from ordering of manufacture of parts of the assemblable mounts through repetitive use of the assemblable mounts to discard of the assemblable mounts after breakage, and parts information indicating conditions of the parts in the completed management target steps, and access authority information indicating an authority to browse and update the parts management information from a management administrator of one of the management target steps through the information terminal; and a control unit that, in response to receiving, from the information terminal, update request information including information indicating the management administrator requesting to update the parts management information and a content of the update, updates the parts management information within a limit of the authority of the management administrator requesting the update indicated in the access authority information.

With this configuration, the assemblable mount management system has the parts management information indicating the conditions of the parts of the assemblable mounts in the completed management target steps in the transport of the coiled objects using the assemblable mounts. The parts management information is updated as requested by the management administrator of the management target steps.

Thus, if a coiled object was damaged during the transport, one can refer to the parts management information and check the condition of each part in each completed management target step to specify causes of the accident such as the part(s) which caused the damage, the management target step in which an inappropriate operation was performed, and the management administrator of that management target step.

### [ADVANTAGEOUS EFFECT OF INVENTION]

According to the present invention, it is possible to provide an assemblable mount management system which, if an accident occurs during conveyance of a coiled object using an assemblable mount, can easily specify the cause of the accident.

### [BRIEF DESCRIPTION OF DRAWINGS]

[Fig. 1] Fig. 1 represents an example of an assemblable mount to be managed by an assemblable mount management system according to an embodiment of the present invention, (a) and (b) being a perspective view and exploded perspective view of an assembled state, (c) being a perspective view illustrating a state of being disassembled and housed in a housing box.
[Fig. 2] Fig. 2 is a set of views explaining transport of a coiled object using the assemblable mount in Fig. 1 as well as return, (a) being a view illustrating a state where the assemblable mount in the assembled state with a coiled object mounted thereon is loaded in a transport container, (b) being a view of assemblable mounts disassembled, housed in housing boxes, and loaded in the transport container.
[Fig. 3] Fig. 3 is a diagram illustrating procedures for transporting coiled objects and is a diagram illustrating up to a point where the coiled objects are transported to an importer by land.
[Fig. 4] Fig. 4 is a flowchart in which the procedures in Fig. 3 are arranged in chronological order.
[Fig. 5] Fig. 5 is a diagram illustrating procedures for returning assemblable mounts.
[Fig. 6] Fig. 6 is a flowchart in which the procedures in Fig. 5 are arranged in chronological order.
[Fig. 7] Fig. 7 is a functional block diagram illustrating hardware configurations of the assemblable mount management system and information terminals.
[Fig. 8] Fig. 8 is a diagram illustrating an example of parts management information and inventory information.
[Fig. 9] Fig. 9 is a diagram illustrating image information of one member in Fig. 8.
[Fig. 10] Fig. 10 is a diagram illustrating an example of access authority information.
[Fig. 11] Fig. 11 is a diagram illustrating an example of update request information and browse request information.
[Fig. 12] Fig. 12 is a diagram illustrating procedures for updating the parts management information.
[Fig. 13] Fig. 13 is a diagram illustrating procedures for browsing the parts management information.
[Fig. 14] Fig. 14 is a flowchart illustrating procedures for calculating a turnaround time.

### [DESCRIPTION OF EMBODIMENTS]

A preferred embodiment of the present invention will be described in detail below based on the drawings.

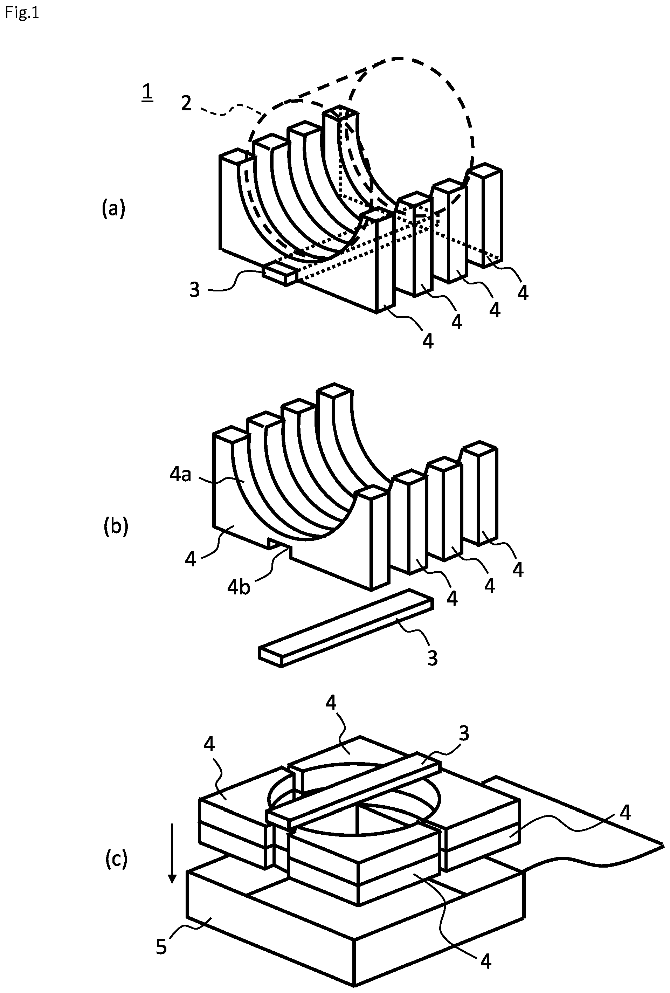

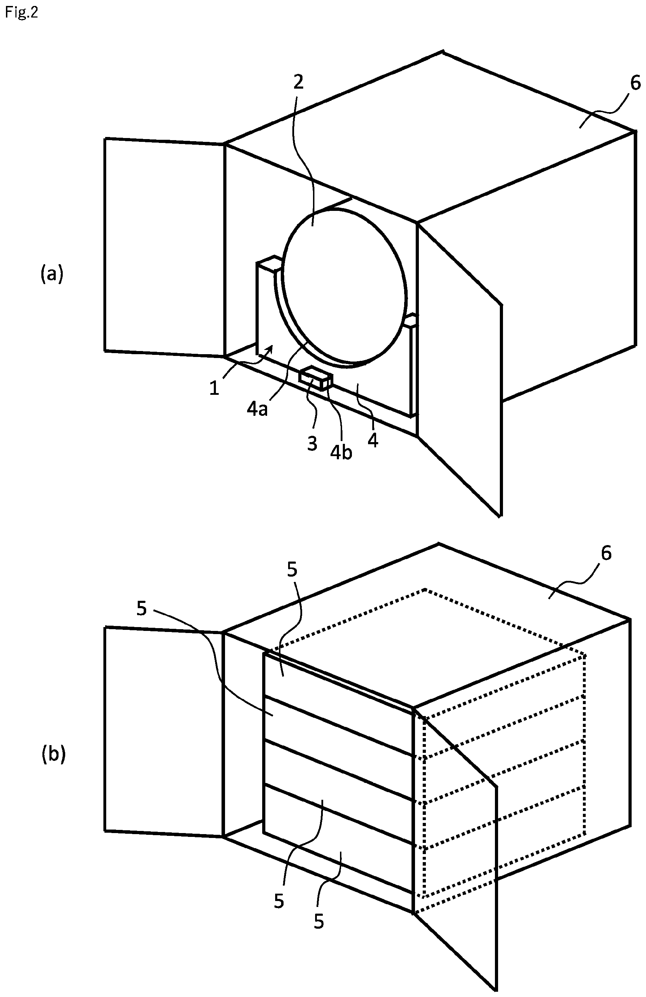

First of all, an example of an assemblable mount to be managed by an assemblable mount management system according to the present embodiment will be described with reference to Figs. 1 and 2.

As illustrated in Fig. 1, an assemblable mount 1 includes a seat 3 and supports 4.

The seat 3 is a member that supports a coiled object 2 to be conveyed and the other constituent members of the assemblable mount 1 and, in Fig. 1, is a prismatic member.

The supports 4 are members that support the coiled object 2 by being in direct contact with the cylindrical surface of the coiled object 2 and, as illustrated in Fig. 1, are four plate-shaped members having a U-shaped support surface 4a corresponding to the cylindrical surface in the upper surface. The bottom surfaces of the supports 4 are flat but include a recess 4b in which to fit the seat 3.

With this structure, as illustrated in Fig. 1(b), the assemblable mount 1 is assembled by placing the seat 3 on a floor surface like the bottom surface of a transport container 6 and fitting the seat 3 into the recesses 4b in the supports 4. By mounting the coiled object 2 on the support surfaces 4a of the supports 4 in this state, the assemblable mount 1 with the coiled object 2 mounted thereon can be loaded in the transport container 6, as illustrated in Fig. 2(a). The coiled object 2 is further fixed by performing an operation called lashing in which the coiled object 2 is tightly fastened to the transport container 6 and the assemblable mount 1 with rope.

The assemblable mount 1 can be disassembled by detaching the supports 4 from the seat 3 as illustrated in Fig. 1(b).

Further, the height of the disassembled assemblable mount 1 can be made smaller than that in the assembled state with approximately the same occupied area by stacking the supports 4 and the seat 3 in their thickness direction and housing them in a housing box 5 as illustrated in Fig. 1(c).

Thus, as illustrated in Fig. 2(b), a plurality of housing boxes 5 each housing a disassembled assemblable mount 1 can be loaded in a single transport container 6 and conveyed. In this way, after the conveyance of coiled objects 2 is finished, the assemblable mounts 1 can be housed in housing boxes 5 as illustrated in Fig. 2(b) and returned.

The assemblable mount 1 illustrated in Fig. 1 is depicted to be far simpler in structure than the actual one in order to simplify the description. The actual assemblable mount 1 needs various other members than the seat 3 and the supports 4, such as a member that restricts movement of the coiled object 2 in the axial direction of its cylindrical body, a cushioning material to be inserted between the container's sidewalls and the supports 4. Nonetheless, it can be understood that, even for an assemblable mount 1 consisting of only two types of members, the seat 3 and the supports 4, as illustrated in Fig. 1, it is necessary to manage three types of members including the housing box 5.

Also, the seat 3 needs to be a rigid body in order to support other members, whereas the supports 4 are preferably elastic bodies in order to prevent the coiled object 2 from being slid and scratched due to vibration during transport. Since the seat 3 and the supports 4 are thus different in material, their manufacturers are therefore usually different as well.

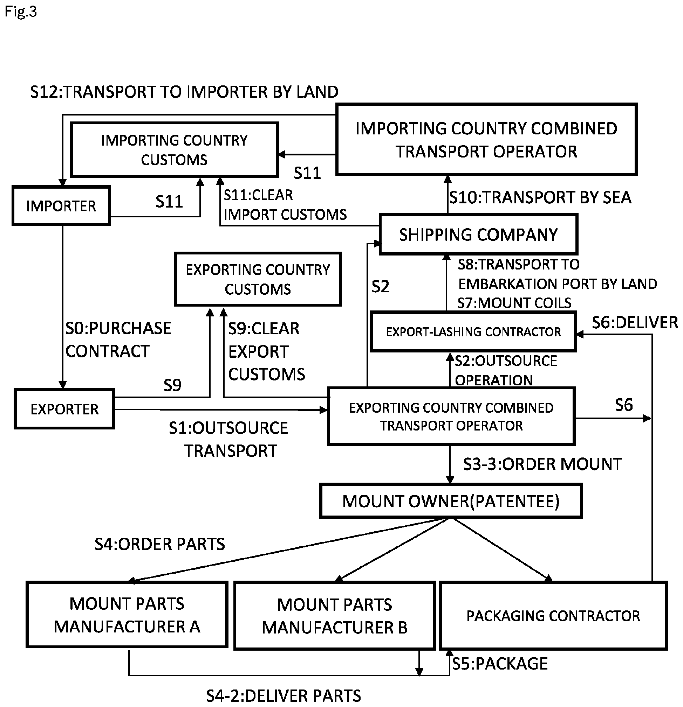

Next, an example of procedures for transporting coiled objects 2 will be described with reference to Figs. 3 to 6. The following description will be given based on an example where an importer which is an overseas trader purchases the coiled objects 2 from an exporter which is a domestic trader.

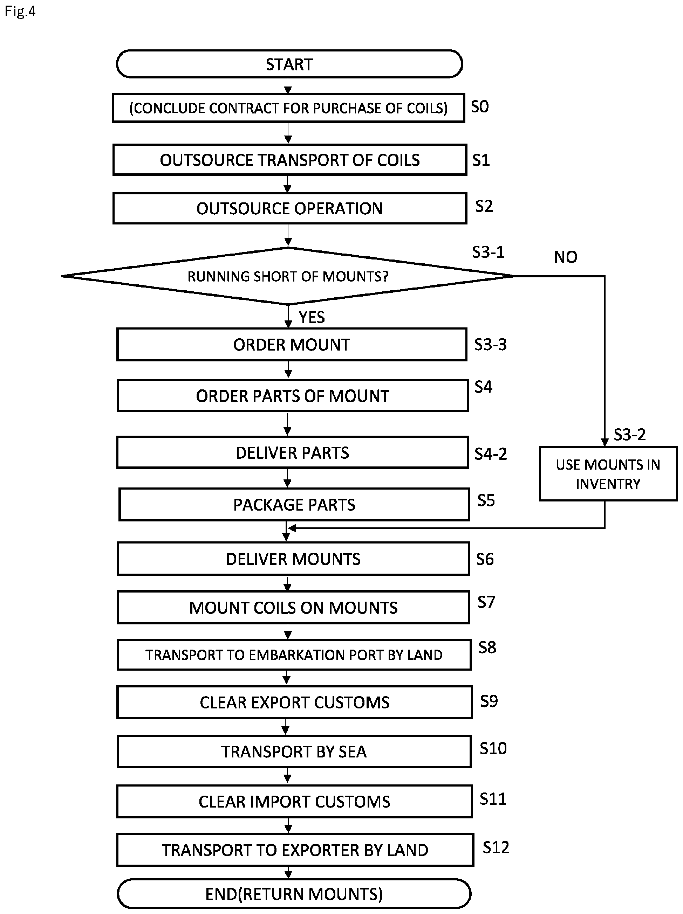

First, suppose that the importer and the exporter conclude a contract for the purchase of the coiled objects 2 (S0 in Figs. 3 and 4). In this case, if the exporter does not have a transport capacity, the exporter outsources the transport to an exporting country combined transport operator which is a domestic carrier (S1 in Figs. 3 and 4, transport outsourcing step). The exporting country combined transport operator to which the operation is outsourced firstly outsources operations to an export-lashing contractor that actually mounts the coiled objects 2 onto assemblable mounts 1 and loads them into a transport container 6 and to a shipping company that transports the transport container 6 by sea (S2 in Figs. 3 and 4, operation outsourcing step). This is because the exporting country combined transport operator itself may not have a transport capacity.

Next, the exporting country combined transport operator needs to prepare assemblable mounts 1 and deliver them to the export-lashing contractor. Here, the exporting country combined transport operator cannot manufacture the assemblable mounts 1 if the assemblable mounts 1 are products associated with another company's patent. In this case, it is possible that the exporting country combined transport operator gets licensed to manufacture and use the assemblable mounts 1. In terms of costs, however, it may be advantageous to get licensed only for use, and rent the assemblable mounts 1 from the patentee and use them. Thus, the exporting country combined transport operator to which the operation is outsourced rents the assemblable mounts 1 from a mount owner and uses them. Specifically, the exporting country combined transport operator firstly checks assemblable mounts 1 in inventory that have been rented from the mount owner, determines whether or not the inventory is enough for the number of assemblable mounts 1 (S3-1 in Fig. 4), and uses mounts in inventory if the inventory is enough (S3-2 in Fig. 4). If the inventory is not enough, the exporting country combined transport operator orders an assemblable mount(s) 1 to cover the shortage and concludes a rental contract (S3-3 in Figs. 3 and 4, mount ordering step).

In response to receiving the order, the mount owner places an order for parts with mount parts manufacturers A and B and a packaging contractor (S4 in Figs. 3 and 4, parts ordering step).

The parts here include a housing box(es) 5. Thus, in the case of ordering parts of an assemblable mount 1, it may involve placing orders for a seat 3, supports 4, and a housing box 5 with different contractors. In Fig. 3, the mount owner places an order for the seat 3 with the mount parts manufacturer A, an order for the supports 4 with the mount parts manufacturer B, and an order for the housing box 5 with the packing contractor. After completing the seat 3 and the supports 4, the mount parts manufacturers A and B deliver the completed seat 3 and supports 4 to the packaging contractor (S4-2 in Figs. 3 and 4, parts delivery step). The packaging contractor performs a packaging operation which involves manufacturing a housing box 5 and housing the delivered seat 3 and supports 4 into the manufactured housing box 5 (S5 in Figs. 3 and 4, packaging step). After completing the packaging, the packaging contractor delivers the housing box 5 with the assemblable mount 1 housed therein to the export-lashing contractor (S6 in Figs. 3 and 4, deliver step). In the case of using assemblable mounts 1 in inventory in S3-1, the exporting country combined transport operator delivers the mounts in inventory to the export-lashing contractor.

After receiving the assemblable mounts 1, the export-lashing contractor further receives the coiled objects 2 from the exporter. The export-lashing contractor further assembles the assemblable mounts 1, mounts the coiled objects 2 thereon, loads them into a transport container 6, and lashes the coiled objects 2 (S7 in Figs. 3 and 4, coil mounting step). After finishing the lashing, the export-lashing contractor closes the door of the transport container 6 and transports it by land to an embarkation port by truck or the like (S8 in Figs. 3 and 4, embarkation port land transport step).

After the transport container 6 arrives at the embarkation port, the exporting country combined transport operator or the exporter goes through the export customs clearance procedures with the customs of the exporting country (S9 in Figs. 3 and 4, export customs clearance step). After the customs clearance procedures, the transport container 6 is loaded onto a vessel bound for the importing country, and a shipping company transports it by sea to a port in the importing country (S10 in Figs. 3 and 4, sea transport step). After the vessel arrives at the port in the importing country, the importer, an importing country combined transport operator to which operations have been outsourced by the exporting country combined transport operator, or the shipping company goes through the import customs clearance procedures with the customs of the importing country (S11 in Figs. 3 and 4, import customs clearance step). After the customs clearance procedures, the importing country combined transport operator transports the transport container 6 by land to a pick-up destination for the importer, and takes out the coiled objects 2 and hands them to the importer at the pick-up destination (S12 in Figs. 3 and 4, importer land transport step).

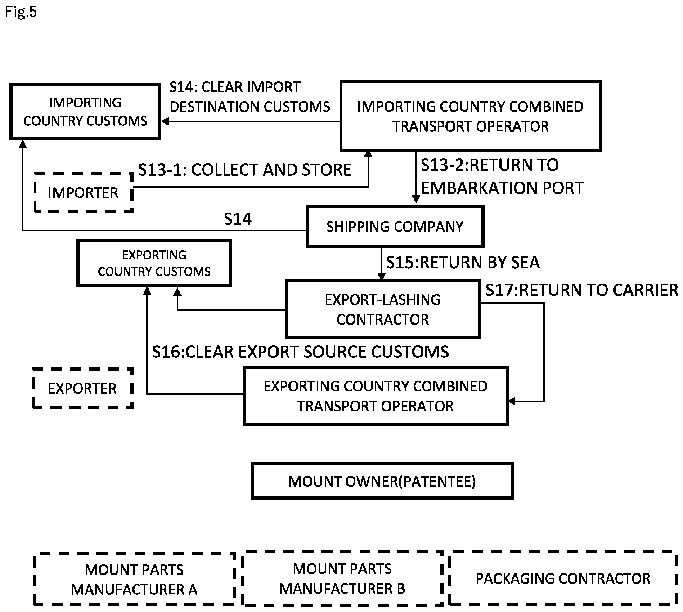

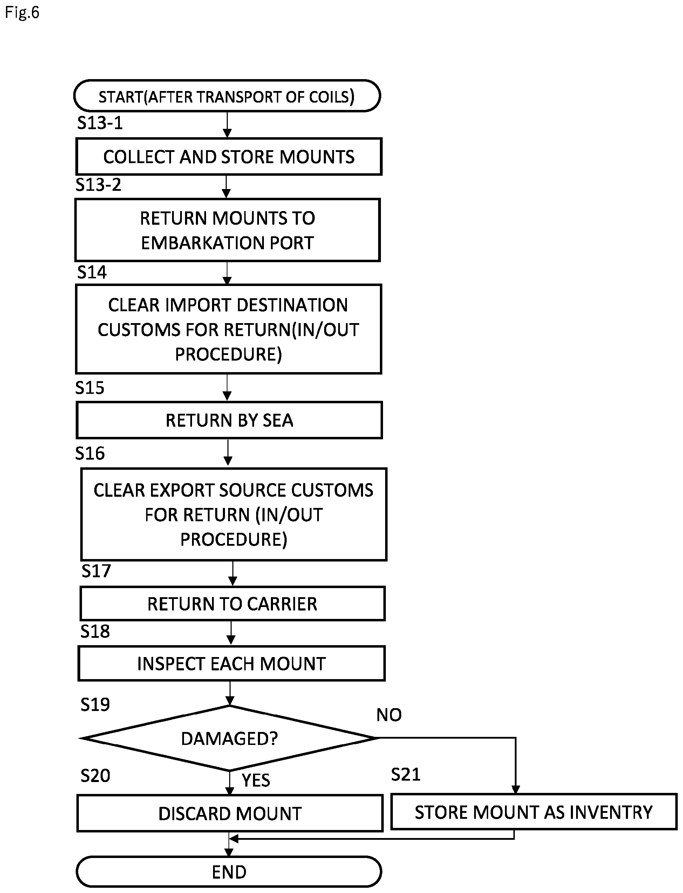

While the above completes the transport of the coiled objects 2, an importing country combined transport operator needs to return the assemblable mounts 1 to an exporting country combined business operator since the assemblable mounts 1 are reusable. Procedures for this return will be described with reference to Figs. 5 and 6.

After the completion of the importer land transport step S12, the importing country combined transport operator disassembles and collects the assemblable mounts 1 and stores them in a warehouse or the like until preparations for the return, such as the arrangement of a vessel for the return, are completed (S13-1 in Figs. 5 and 6, collection-storage step). After the preparations for the return are completed, the importing country combined transport operator then houses the disassembled assemblable mounts 1 in housing boxes 5 as illustrated in Fig. 2(b) and loads them into a transport container 6. Moreover, the importing country combined transport operator transports this transport container 6 by land to an embarkation port where a vessel for sea transport to the location of the exporting country combined business operator is anchored (S13-2 in Figs. 5 and 6, embarkation port return step). Note that the importing country combined transport operator in S13-1 does not necessarily have to be the same operator as the importing country combined transport operator in S12. That is, the importing country combined transport operator that transports the coiled objects 2 by land and the importing country combined transport operator that disassembles and collects the assemblable mounts 1 after the land transport may be different.

After the transport container 6 loaded with the assemblable mounts 1 arrives at the embarkation port, the importing country combined transport operator or a shipping company which is a vessel operator goes through customs clearance procedures for returning the assemblable mounts 1 with the customs of the country into which the coiled objects 2 were imported (S14 in Figs. 5 and 6, import destination return customs clearance).

After the customs clearance procedures, the transport container 6 loaded with the assemblable mounts 1 is loaded onto the vessel, and transported by sea by the shipping company to a port in the country from which the coiled objects 2 were exported (S15 in Figs. 5 and 6, sea return step). The shipping company in S15 does not necessarily have to be the same as the shipping company in S10. After the vessel arrives at the port in the country from which the coiled object 2 was exported, the exporting country combined transport operator or the export-lashing contractor goes through customs clearance procedures for returning the assemblable mounts 1 with the customs of the country from which the coiled objects 2 were exported (S16 in Figs. 5 and 6, export destination return customs clearance). Incidentally, S14 and S16 are also called IN/OUT procedures.

After the customs clearance, the transport container 6 loaded with the assemblable mounts 1 is handed to the export-lashing contractor and returned by land to the exporting country combined transport operator (S17 in Figs. 5 and 6, land return step).

After receiving the assemblable mounts 1, the exporting country combined transport operator inspects whether any of the constituent parts of the assemblable mounts 1 is damaged (S18 in Fig. 6, inspection step). The exporting country combined transport operator proceeds to S20 if the inspection result indicates that there is damage, and proceeds to S21 if the inspection result indicates that there is no damage (S19 in Fig. 6). If there is damage, the exporting country combined transport operator discards the damaged part(s) (S20 in Fig. 6). If there is no damage, the exporting country combined transport operator stores the assemblable mounts 1 as inventory in a warehouse (S21 in Fig. 6, storage step).

The above is description of an example of the procedures for transporting coiled objects 2.

As can be understood from this description, in the transport of coiled objects 2, it is necessary to track and manage each of the parts of the assemblable mounts 1 used for the transport in each of the steps S1 to S21, i.e., the steps including the step of ordering the assemblable mounts 1 to the step of storing and/or discarding them after the use. Moreover, if an accident such as damaging a coiled object 2 occurs during the transport, it is necessary to clarify which step's operation caused the accident among S1 to S21. Furthermore, a plurality of business contractors are in charge of the steps S1 to S21, as illustrated in Fig. 3. Hence, if an accident occurs, it is also necessary to clarify which contractors is responsible for the accident, in order to take measures to prevent a recurrence of the accident.

An assemblable mount management system 100 according to the present embodiment is intended to, if an accident that damages a coiled object 2 occurs during the transport of the coiled object 2 as described above, clarify the step that caused it, the part(s) that caused the accident, and the responsible party.

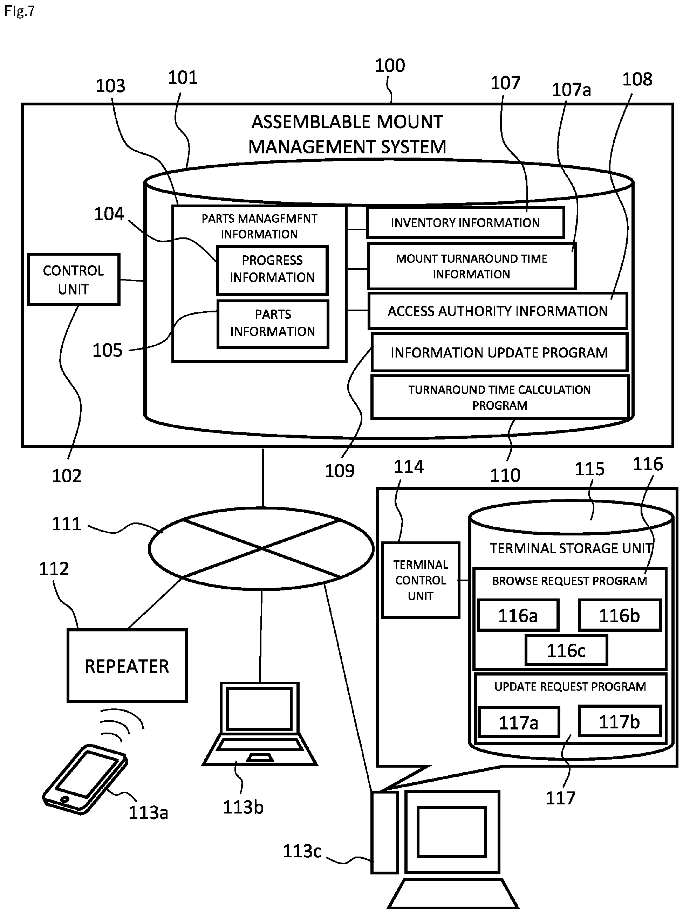

Next, configurations of the assemblable mount management system 100 and information terminals according to the present embodiment will be described with reference to Figs. 7 to 11.

The assemblable mount management system 100 is a computer for use in management of repetitively used assemblable mounts 1 in a physical distribution in which coiled objects 2 are mounted on the assemblable mounts 1, housed in transport containers 6, and transported. As illustrated in Fig. 7, the assemblable mount management system 100 is connected to information terminals 113a, 113b, and 113c through a network 111.

The assemblable mount management system 100 includes a storage unit 101 and a control unit 102.

The storage unit 101 is a storage device that stores information necessary for the management of the assemblable mounts 1 and programs necessary for the management.

As illustrated in Fig. 7, the storage unit 101 has parts management information 103, access authority information 108, inventory information 107, an information update program 109, mount turnaround time information 107a, and turnaround time calculation program 110 as stored information.

The parts management information 103 is information indicating the status and condition of each of the parts of the assemblable mounts 1 in each of a plurality of management target steps. The management target steps here are pre-defined steps starting from the ordering of manufacture of the parts through the repetitive use to the discard after breakage, and obtained specifically by extracting items to be managed for each of the transport steps among the steps S0 to S21 illustrated in Figs. 3 to 6.

Specifically, the management target step include the mount ordering step S3-3, the parts ordering step S4, the parts delivery step S4-2, the packaging step S5, the delivery step S6, the coil mounting step S7, transport steps, return steps, the inspection step S18, the storage step S21, and the discard step S20. These management target steps are exemplarily listed and does not mean that all of these steps are always essential. However, steps with different management administrators are preferably included as management target steps. Moreover, S0 to S3-2 in Figs. 3 and 4 may be included as management target steps.

The transport steps include, for example, the embarkation port land transport step S8, the export customs clearance step S9, the sea transport step S10, the import customs clearance step S11, and the importer land transport step S12, as illustrated in Figs. 3 and 4.

Note that, in the case of transporting coiled objects 2 only domestically, no exporting or importing procedures are required, and neither the export customs clearance step S9 nor the import customs clearance step S11 has to be included as a management target step.

Also, in the case of performing only land transport and not performing sea transport, the transport steps will simply be steps of transporting the coiled objects 2 from the seller to the buyer by land.

The return steps include the collection-storage step S13-1, the embarkation port return step S13-2, the import destination customs clearance step S14, the sea return step S15, the export source return customs clearance S16, and the land return step S17, as illustrated in Figs. 5 and 6.

Note that, in the case of transporting coiled objects 2 only domestically, no exporting or importing procedures are required for the return, and neither the import destination customs clearance step S14 nor the export source return customs clearance step S16 has to be included as a management target step.

Also, in the case of performing only land transport and not performing sea transport, the return steps will simply be steps of returning the assemblable mounts 1 from the buyer of the coiled object 2 to the owner of the assemblable mounts 1 by land.

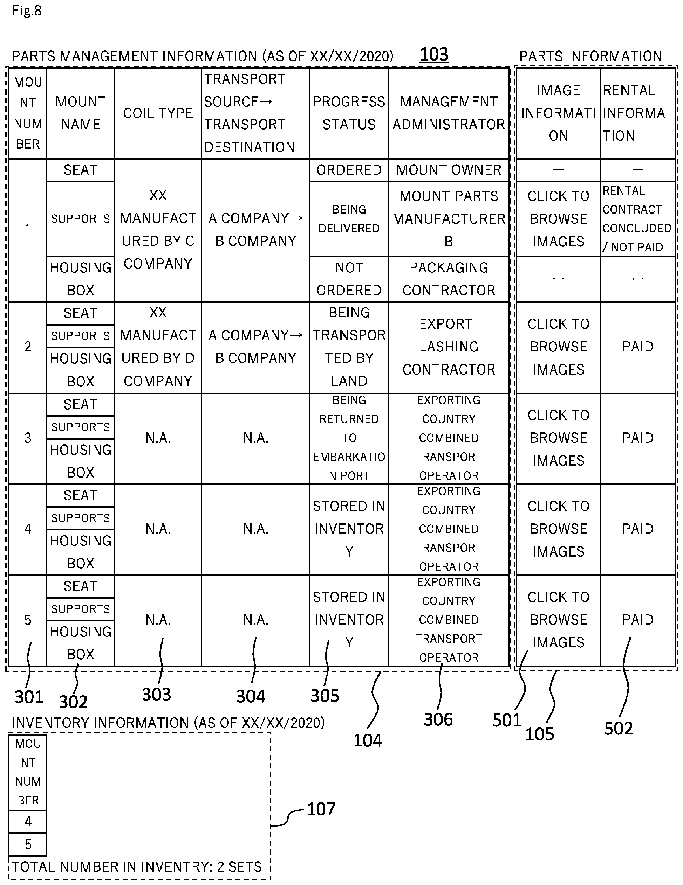

As illustrated in Figs. 7 and 8, the parts management information 103 includes progress information 104 and parts information 105.

The progress information 104 is information indicating ongoing and completed management target steps for the parts of assemblable mounts 1.

The progress information 104 exemplarily illustrated in Fig. 8 has mount number information 301, mount name information 302, coil type information 303, transport source-to-transport destination information 304, progress status information 305, and management administrator information 306.

Fig. 8 exemplarily illustrates an image displayed as the progress information 104 on a display unit of the assemblable mount management system 100 or the information terminal 113a, 113b, or 113c.

The mount number information 301 is a set of numbers for distinguishing the assemblable mounts 1 and, in Fig. 8, is a set of sequential numbers. However, alphabetical letters or the like may be used to distinguish the assemblable mounts 1. The coil type information 303 is information indicating the types of coiled objects 2 to be transported on the assemblable mounts 1 with specific mount numbers and, here, the manufacturers and model numbers are exemplarily shown. By referring the coil types, it is possible to check whether a coiled object 2 of a wrong type is being transported.

The transport source-to-transport destination information 304 is information indicating the transport source and transport destination of each coiled object 2. By referring to this information, it is possible to check whether the coiled object 2 is being transported to a wrong transport destination. The progress status information 305 is information indicating ongoing management target steps. For example, for the mount name "Supports" under the mount number "1", the progress status information 305 is "Being delivered", indicating that the parts delivery step S4-2 is in progress and an operation of handing manufactured supports 4 to the packaging contractor is being performed.

The management administrator information 306 is information indicating the management administrators of the ongoing management target steps. For example, for the mount name "Supports" under the mount number "1", the management administrator information 306 is "Mount Parts Manufacturer B". Thus, if any of the supports 4 has a trouble such as being damaged at this stage, it can be understood that the operation of "Mount Parts Manufacturer B" had a problem. It can therefore be understood that "Mount Parts Manufacturer B" is responsible for the trouble.

The parts information 105 is information indicating conditions and statuses of the parts in the completed management target steps, and has image information 501 and rental information 502.

The image information 501 is an image(s) indicating the exterior of a constituent part(s) of the assemblable mount 1 in each completed management target step, and is specifically a picture of the part(s) which the management administrator took when finishing the management target step.

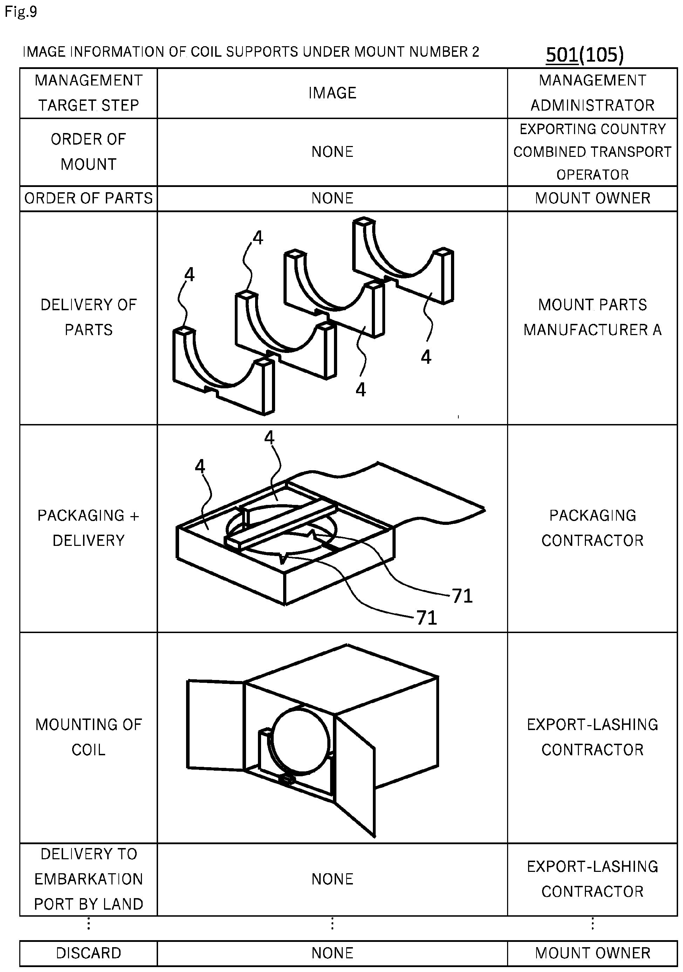

For example, in the case of browsing the image information 501 of the mount name "Supports" under the mount number "2" shown in Fig. 8, clicking the corresponding cell displays an image of each completed step as illustrated in Fig. 9.

Fig. 9 exemplarily illustrates images displayed as the image information 501 on the display unit of the assemblable mount management system 100 or the information terminal 113a, 113b, or 113c.

The mount name "Supports" under the mount number "2" shown in Fig. 8 has progressed to "Being transported by land to embarkation port", as indicated by the progress status information 305. Thus, the embarkation port land transport step S8 is in progress, and the management target steps up to the coil mounting step S7, which is the immediately preceding step, have already been completed. Thus, as illustrated in Fig. 9, the image information 501 has images of the supports 4 taken when the parts delivery step S4-2, the packaging step S5, the delivery step S6, and the coil mounting step S7 were completed. In Fig. 9, the packaging step S5 and the delivery step S6 are combined into a single step since the management administrators are the same contractors.

By referring to the image information 501, it is possible to visually figure out the condition of the part(s) in each completed management target step. Thus, if an accident such as damaging occurred, it is possible to easily figure out the damaged part(s).

The image information 501 may include information other than images. In Fig. 9, the management administrators of the management target steps are included as information besides the images since, in this way, if a damaged part is found from an image, it is possible to quickly figure out the management administrator.

As described above, the assemblable mount management system 100 has the parts management information 103 indicating the statuses and conditions of the parts of assemblable mounts 1 in the completed management target steps in the transport of coiled objects 2 using the assemblable mounts 1. Also, the parts management information 103 is updated as requested by the management administrators that are parties responsible for the management target steps.

Thus, if a coiled object 2 was damaged during the transport, one can refer to the parts management information 103 and check each part in each completed management target step to specify causes of the accident such as the part(s) which caused the damage, the management target step in which an inappropriate operation was performed, and the management administrator of that management target step.

For example, for the mount number "2" in Fig. 8, suppose that, in the middle of the embarkation port land transport step S8, the transport container 6 starts making abnormal noises, and as its door is opened, supports 4 of the assemblable mount 1 are found cracked and the coiled object 2 is touching the interior wall of the transport container 6 and is damaged. In this case, the cracking of the supports 4 can be considered the cause of the damage to the coiled object 2. If, for example, the composition of the constituent material of the supports 4 is abnormal, conducting an analysis on the composition even in this state can show that the manufacture was problematic. However, if the composition is not problematic, it may be impossible to figure out whether the supports 4 cracked when they were manufactured or when the packaging was performed or when loaded into the transport container 6 by simply looking at the cracked supports 4.

In this case, for example, the exporting country combined transport operator, investigating the cause of the accident, reviews the completed management target steps for the supports 4 under the mount number "2". Specifically, the exporting country combined transport operator browses the parts information 105 in the parts management information 103 of the parts delivery step S4-2, the packaging step S5 and the delivery step S6, and the coil mounting step S7, as illustrated in Fig. 9.

As illustrated in Fig. 9, no crack is observed on the supports 4 under the mount number "2" in the image information 501 of the parts delivery step S4-2. Thus, the cracking did not occur at the time of the manufacture, and the mount parts manufacturer A, which is the management administrator of the parts delivery step S4-2, is not considered responsible for the damage to the coiled object 2.

On the other hand, in the image information 501 of the packaging step S5 and the delivery step S6, cracked surfaces 71 are observed on supports 4. Thus, the cracking is likely to have occurred due to an inappropriate operation in either the packaging step S5 or the delivery step S6, and the packaging contractor, which was the responsible party, is considered responsible for the damage to the coiled object 2. Therefore, remedial measures, such as performing an appropriate operation to prevent the supports 4 from cracking, can be proposed.

Also, in the image information 501 of the coil mounting step S7, there are no apparent problems with the exterior of the assemblable mount 1 such as tilting or collapsing. Thus, the export-lashing contractor, which is the party responsible for the coil mounting step S7, is considered not significantly responsible.

Nonetheless, the export-lashing contractor used the assemblable mount 1 despite the presence of the cracked surfaces 71 in the supports 4. Therefore, it is possible to reliably prevent the occurrence of the accident by taking measures to not assemble supports 4 in the future if they have the cracked surfaces 71.

The rental information 502 is information on the right of rental of each constituent part of the assemblable mount 1 in each completed management target step.

As illustrated in Fig. 3, in the transport expected to be performed in the present embodiment, the exporting country combined transport operator rents assemblable mounts 1 from a mount owner and conveys coiled objects 2 on them.

Thus, when the parts information 105 includes the rental information 502, it is possible to figure out information on the rental as well. For example, it can be understood that a rental contract has been concluded for the supports 4 of the assemblable mount 1 with the mount number "1" in Fig. 8. It can also be understood that the payment has not been made.

It can be understood that, for the mount numbers "2" to "5" in Fig. 8, on the other hand, the payments have been made. Note that the progress information 104 under the mount numbers "4" and "5" is "Stored in inventory". This indicates that the assemblable mounts 1 have been returned and then stored in a warehouse.

The rental information 502 may include information indicating whether a rental fee has been paid. For example, the payment for the supports 4 of the assemblable mount 1 with the mount number "1" in Fig. 8, which has not been made, may be made by clicking the "Not paid" cell. Also, procedures for depreciation and the like associated with making the payment may be performed together.

The inventory information 107 is information indicating the number of assemblable mounts 1 in inventory stored in a reusable condition after being returned among the assemblable mounts 1 stored in the parts management information 103, and is stored in the storage unit 101, as illustrated in Fig. 7.

As illustrated in the lower section of Fig. 8, the inventory information 107 is information obtained by extracting the assemblable mounts 1 in the management target step indicating the state of "Stored in inventory" in the parts management information 103 and storing the number of them. Specifically, the inventory information 107 is information obtained by extracting, from the parts management information 103, the assemblable mounts 1 not reused to transport a new coiled object 2 after S21 in Fig. 6, and storing the number of them.

For example, the assemblable mounts 1 in the management target step indicating the state of "Stored in inventory" in the parts management information 103 illustrated in Fig. 8 are the two with the mount numbers "4" and "5". Thus, "2" is stored as the number in inventory in the inventory information 107.

With this configuration, in the case where transport of a new coiled object(s) 2 is outsourced, the exporting country combined transport operator compares the number of coiled objects 2 whose transport is outsourced and the number in inventory, and can place an order for manufacture of a new assemblable mount(s) 1 only when the number in inventory is less than the number of coiled objects 2 whose transport is outsourced. This can prevent ordering of unnecessary assemblable mounts 1.

The mount turnaround time information 107a is information obtained by calculating a mount turnaround time which is a period of time required for every assemblable mount 1 stored in the parts management information 103 to be returned once in the course of transporting a coiled object 2, and storing the calculated time. Specifically, the mount turnaround time is derived by dividing a total fleet count which is the number of all assemblable mounts 1 stored in the parts management information 103 by an export count which is the number of assemblable mounts 1 used in export per unit period.

The total fleet count is the total number of assemblable mounts 1 stored in the parts management information 103 and can be derived from the parts management information 103. Also, in the case where the exporting country combined transport operator is renting assemblable mounts 1 from a mount owner, the total number of assemblable mounts 1 within the period of the rental contract is the total fleet count.

The export count is the number of assemblable mounts 1 that reached the delivery step S6 per week if a unit period is assumed to be 1 week, for example, and can be derived from the parts management information 103.

For example, when the total fleet count at a given time point is 500 and the export count in the last 1 week is 100, the mount turnaround time at that time point is 500/100 = 5 weeks, indicating that it takes 5 weeks for all assemblable mounts 1 to be returned once.

The mount turnaround time is calculated each time a unit period elapses, and the calculation result is accumulated in the mount turnaround time information 107a. Thus, the mount turnaround time information 107a is information indicating mount turnaround times in chronological order.

Since the assemblable mount management system 100 has the mount turnaround time information 107a, previous mount turnaround times can be obtained from the mount turnaround time information 107a. This makes it possible to figure out the change in demand from the fluctuations in turnaround time. Thus, in particular, when transport is outsourced to the exporting country combined transport operator, it can figure out how many assemblable mounts 1 to newly order.

Also, since the mount turnaround time information 107a is information indicating mount turnaround times in chronological order, it also indicates the turnaround times in predetermined periods in the past. Thus, in the case where the demand for outsourcing transport of coiled objects 2 fluctuates seasonally, how many assemblable mounts 1 to newly order can be estimated by referring to the previous mount turnaround times in the same season.

The turnaround time calculation program 110 is a program that derives the mount turnaround time information 107a. The turnaround time calculation program 110 is prepared in the case where the mount turnaround time information 107a needs to be derived, and is not essential.

The access authority information 108 is information indicating the authority of the management administrator of one of the management target steps in the parts management information 103 to browse and update the parts management information 103 via the information terminals 113a to 113c.

While the assemblable mount management system 100 stores the parts management information 103 in the storage unit 101, information in the parts management information 103 needs to be updated when the transport of a coiled object 2 progresses, specifically, when the operation of a management target step completed. To update the information, it is necessary to have the management administrator of the completed management target step send information related to the update to the assemblable mount management system 100 via the information terminal 111a, 111b, or 111c. Here, each management administrator is normally in charge only of a particular management target step(s). Thus, the update authority of each management administrator needs to be defined so as to keep the management administrator from updating a management target step which it is not in charge of. Also, each management administrator of a management target step(s) needs to be able to browse the parts management information 103 in order to perform an appropriate update.

Note that the parts management information 103 holds information on the ordering to the discard of assemblable mounts 1. From the viewpoint of security, it is preferable to permit each individual management administrator to browse only information associated with its operation. For example, the mount parts manufacturers involved only in manufacturing the parts of the assemblable mounts 1 do not need to browse the transport steps. For this reason, the assemblable mount management system 100 stores the access authority information 108, which indicates the update and browse authorities of each management administrator, in the storage unit 101.

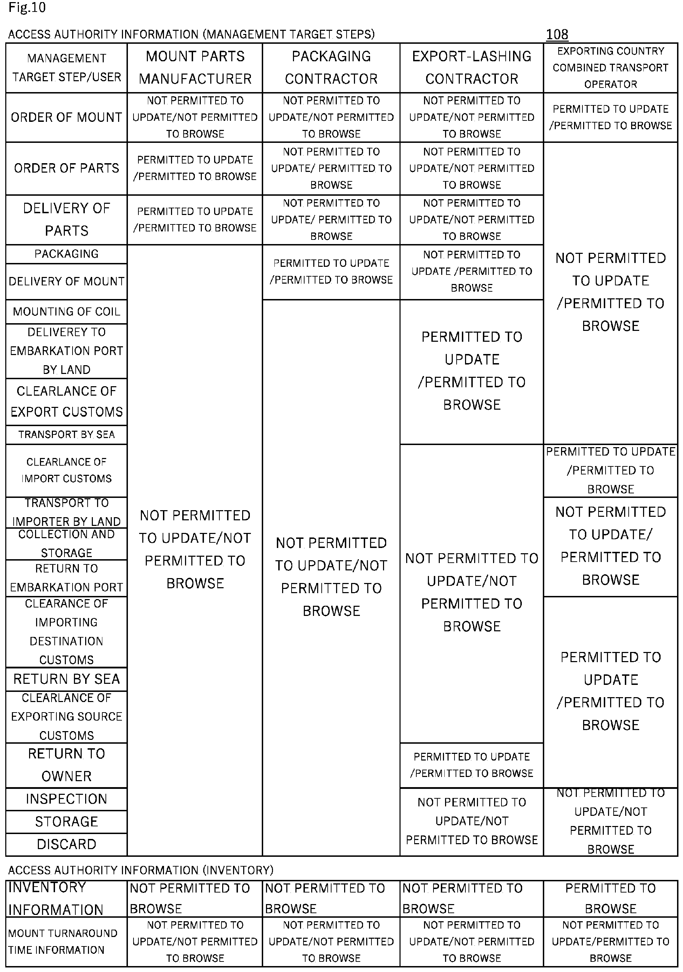

As illustrated in Fig. 10, in the access authority information 108, for each management target step in the parts management information 103, which user being a management administrator is permitted to browse and update the management target step is set.

For example, for the packaging contractor, the updatable management information is only the packaging step S5 and the delivery step S6. This is because the packaging contractor does not perform steps other than the packaging step S5 and the delivery step S6 and therefore cannot be granted the authority to update the steps which it does not perform. Note that the updatable management target steps are also browsable.

Here, for the packaging contractor, the parts ordering step S4 is only browsable. This is because although the packaging contractor does not perform the parts ordering step S4, it performs the operation of packaging the ordered parts and therefore needs to figure out the progress of the manufacture of the ordered parts.

As described above, a management target step which a management administrator does not perform may be browsable for the management administrator if it is a management target step that affects the progress of the management target step(s) which the management administrator performs.

Note that Fig. 10 is exemplary illustration of the access authority information 108, and only some management administrators are listed. The actual access authority information 108 has the access authority of each of the management administrators of all management target steps managed by the assemblable mount management system 100.

The access authority information 108 may differ depending on the person in charge within a business operator which is a management administrator. For example, the mount ordering step S3-3 may be split into an order placement request step S3-3-1 of requesting placement of the order and an order placement approval step S3-3-2 of approving the placement of the order. Moreover, a person in charge of sales may be granted the authority to update the order placement request step S3-3-1, and a person in charge of examining whether or not to permit placement of orders may be granted the authority to update the order placement approval step S3-3-2. The reason is as follows. The exporting country combined transport operator is a business operator that performs the mount ordering step S3-3. In the exporting country combined transport operator, the person in charge of sales for the exporter looks to increase the number of assemblable mounts 1 to be ordered to promote the operator's transport capacity if the person wants the exporter to outsource transport as much as possible. From the viewpoint of internal control, on the other hand, the person in charge of sales should not be permitted to place orders without limit. Hence, the exporting country combined transport operator needs a department that receives an order placement request, reviews the necessity of the placement of the order, examines whether to permit the placement of the order, and approves the placement of the order only when determining that the order can be placed.

For the above reason, the access authority information 108 may differ depending on the person in charge within a business operator which is a management administrator.

The access authority information 108 may also be information indicating whether or not to permit browse of the inventory information 107 and the mount turnaround time information 107a. For example, in Fig. 10, it is the exporting country combined transport operator that is permitted to browse the inventory information 107 and the mount turnaround time information 107a. The exporting country combined transport operator will need to newly order an assemblable mount(s) 1 if the number of returned assemblable mounts 1 in inventory is not enough when transport is outsourced to the exporting country combined transport operator. Thus, by knowing the number in inventory and the mount turnaround time, it is possible to keep from ordering unnecessary assemblable mounts 1 or ordering an insufficient number of assemblable mounts 1.

The access authority information 108 may be information indicating whether or not to permit browse of the mount number information 301, the mount name information 302, the coil type information 303, the transport source-to-transport destination information 304, the progress status information 305, and the management administrator information 306 in the parts management information 103. For example, since the mount parts manufacturers A and B do not need to browse the transport source-to-transport destination information 304, the access authority information 108 may be information indicating that the mount parts manufacturers A and B are not permitted to browse the transport source-to-transport destination information 304.

The inventory information 107 cannot be updated by any management administrators. The reason is that the inventory information 107 is obtained by extracting the assemblable mounts 1 in the management target step indicating the state of "Stored in inventory" in the parts management information 103 and storing the number of them, and no management administrator needs to update the number in inventory.

The mount turnaround time information 107a cannot be updated by any management administrators either since the mount turnaround time information 107a is obtained by calculating the turnaround time of the assemblable mounts 1 based on the parts management information 103, and no management administrator needs to update it.

The information update program 109 is a program that causes the assemblable mount management system 100 to operate in response to requests to browse and update the parts management information 103 from management administrators via the information terminals 113a to 113c. Specifically, the information update program 109 is a program that causes the control unit 102 to determine whether to permit the browse and update and, if permitting the browse and update, performs an operation for enabling the browse and update.

The control unit 102 is a device that causes the assemblable mount management system 100 to operate by following the procedures written in the information update program 109 and the turnaround time calculation program 110. In the case where the assemblable mount management system 100 is a computer, the control unit 102 is its central processing unit.

Specifically, in response to a request to update the parts management information 103, the control unit 102 operates as follows based on the information update program 109. Firstly, the control unit 102 receives update request information including information indicating the management administrator requesting to update the parts management information 103 and the contents of the update from the information terminal 111a, 113b, or 113c. Then, the control unit 102 updates the parts management information 103 within the limit of the authority of the management administrator requesting the update indicated in the access authority information 108.

After updating the parts management information 103, the control unit 102 may send information indicating the result of the update to the management administrators having the authority to browse the parts management information 103 through the information terminals 113a to 113c.

With this configuration, the management administrators having the authority to browse the updated parts management information 103 can automatically obtain the result of the update through the information terminals 113a to 113c. Thus, the management administrators having the browse authority can quickly obtain the updated information.

Also, in response to a request to browse the parts management information 103, the control unit 102 operates as follows based on the information update program 109.

Firstly, if browse request information being information as a request to browse the parts management information 103 and information including a management administrator requesting the browse is sent from the management administrator through the information terminal 113a, 113b, or 113c, the control unit 102 receives this. Then, the control unit 102 sends the parts management information 103 within the limit of the authority of the management administrator requesting the browse to the terminal among the information terminals 113a to 113c to which the browse request was sent, the authority being indicated in the access authority information 108.

Also, if the parts management information 103 is updated and the number in inventory changes, the control unit 102 changes the number in inventory accordingly. For example, if there are reusable assemblable mounts 1 becoming ready to reuse by completing the return steps, the control unit 102 adds the number of these assemblable mounts 1 to the number in inventory in the inventory information 107. Specifically, if the number of assemblable mounts 1 in the management target step indicating the state of "Stored in inventory" increases, the control unit 102 increases the number in inventory by the number increased. If the number of assemblable mounts 1 in the management target step indicating the state of "Stored in inventory" decreases, the control unit 102 decreases the number in inventory by the number decreased.

With this configuration, the number in inventory is automatically updated according to the update of the parts management information 103. In this way, no management administrator needs to update the number in inventory, which can prevent the update operation from becoming complicated.

Based on the turnaround time calculation program 110, the control unit 102 may calculate the turnaround time of the assemblable mounts 1 and store it as the mount turnaround time information 107a in the storage unit 101. A specific procedure is as follows.

Firstly, the control unit 102 derives the total fleet count from the parts management information 103 and stores it in the storage unit 101.

Then, the control unit 102 refers to the parts management information 103, calculates the export count, and stores it in the storage unit 101.

Then, the control unit 102 adds a value obtained by dividing the total fleet count by the export count to the mount turnaround time information 107a as the turnaround time in the last unit period, and stores it in the storage unit 101.

The assemblable mount management system 100 needs to be capable of communicating with the information terminals 113a to 113c through the network 111. The assemblable mount management system 100 also needs to have the control unit 102 capable of executing the information update program 109 and the turnaround time calculation program 110. The assemblable mount management system 100 also needs to have the storage unit 101 having a capacity that can store the parts management information 103, the access authority information 108, the information update program 109, and the turnaround time calculation program 110.

A computer which is a so-called server may be an example of an apparatus satisfying such requirements.

Note that the server here includes not only a server using a single computer like a physical server, but also a plurality of servers virtualized on a single server like virtual servers. The server also includes a configuration in which a plurality of computers connected by the network 111 are configured as a virtual server like a cloud server.

The information terminals 113a to 113c are computers to be used by management administrators to communicate with the assemblable mount management system 100 and, as illustrated in Fig. 7, connected through the network 111 to the assemblable mount management system 100. "Connected through the network 111" here includes being wirelessly connected to the network 111 through a repeater 112, such as a wireless LAN, like the information terminal 113a.

As illustrated in Fig. 7, the information terminal 113c includes a terminal storage unit 115 and a terminal control unit 114.

The terminal storage unit 115 is a storage medium storing programs necessary for communicating with the assemblable mount management system 100, and includes an update request program 117 and a browse request program 116.

The update request program 117 is a program that communicates with the assemblable mount management system 100 when the parts management information 103 is updated.

Specifically, the update request program 117 includes update request information generation means 117a for generating update request information and update request information sending means 117b for sending the generated update request information as programs.

The update request information includes a management target step requested to be updated, an item requested to be updated, the contents of the update, and information on the management administrator requesting the update such as a user ID of the management administrator.

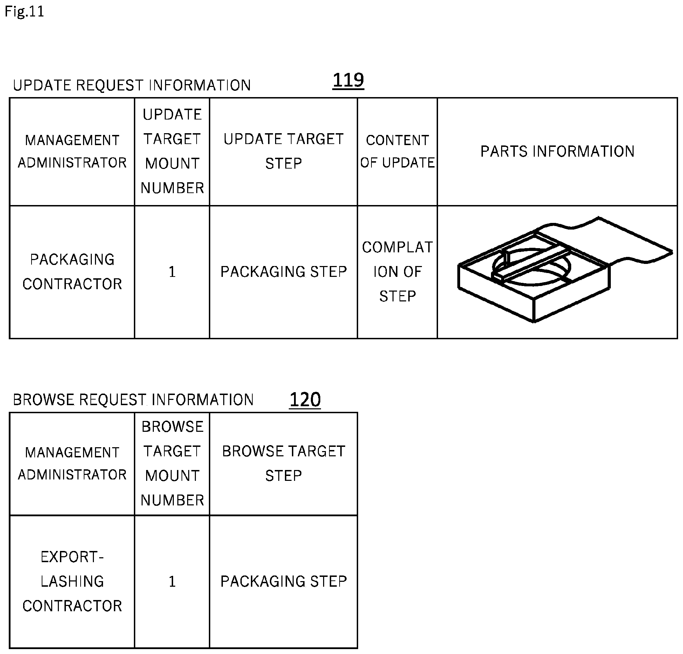

For example, when the packaging contractor completes packaging an assemblable mount 1 and delivers it to the export-lashing contractor, the packaging contractor takes an image of the assemblable mount 1 immediately before the delivery in order to prove that the product has no defect when sent out. In this case, the update request information is information illustrated in Fig. 11. Specifically, update request information 119 illustrated in Fig. 11 includes the packaging contractor, which is the management administrator, the mount number of the assemblable mount 1 an image of which was taken, the step to be updated, the contents of the update, which, in this case, is an indication of the completion of the step, and the parts information 105 which is the taken image.

The browse request program 116 is a program that communicates with the assemblable mount management system 100 when the parts management information 103 or the inventory information 107 is browsed.

Specifically, the browse request program 116 includes browse request information generation means 116a for generating browse request information and browse request information sending means 116b for sending the generated browse information. The browse request program 116 also includes parts management information reception means 116c for receiving the parts management information 103 sent from the assemblable mount management system 100 when the browse is permitted.

When the export-lashing contractor wishes to browse the parts information 105 of the packaging step S5 for the mount number "1", browse request information 120 is information indicating the export-lashing contractor, which is the browse requester, the browse target mount number, and the packaging step S5, which is the browse target step, as illustrated in the lower section of Fig. 11.

The terminal control unit 114 is a device that causes the information terminal 113a, 113b, or 113c to operate by following the procedures written in the update request program 117 and the browse request program 116. In the case where the information terminal 113a, 113b, or 113c is a computer, the terminal control unit 114 is its central processing unit.

Note that the configurations of the information terminals 113a and 113b are similar to the information terminal 113c, and description thereof is therefore omitted. The exteriors and sizes of the information terminals 113a to 113c can be selected as appropriate as long as they are devices including the terminal storage unit 115 and the terminal control unit 114 and being capable of communicating with the assemblable mount management system 100. In Fig. 7, the information terminals 113a, 113b, and 113c are illustrated as a smartphone, a laptop PC, and a desktop PC, respectively.

The above is description of the configurations of the assemblable mount management system 100 and the information terminals 113a to 113c according to the present embodiment.

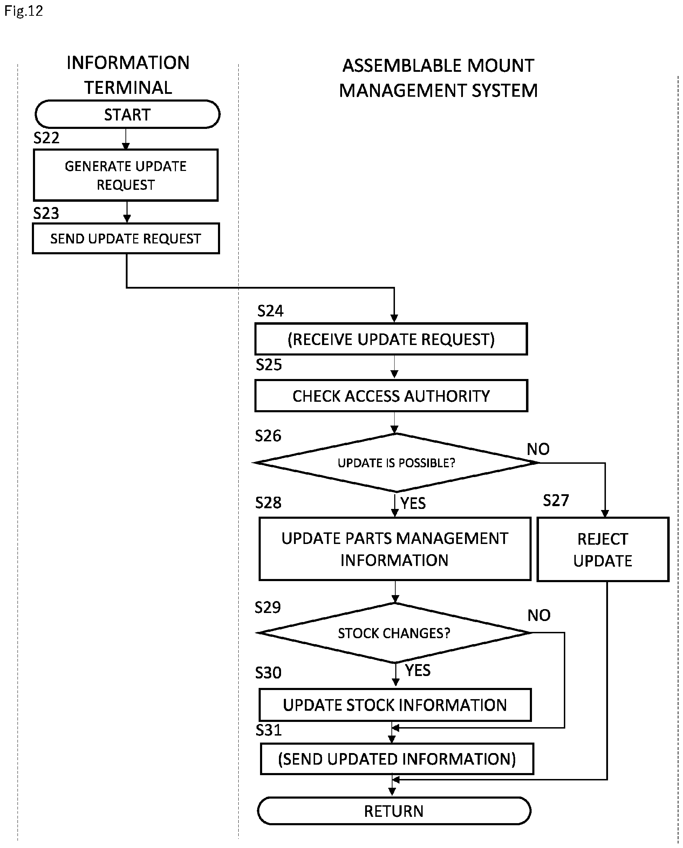

Next, operations of the assemblable mount management system 100 and the information terminals 113a to 113c according to the present embodiment will be schematically described with reference to Figs. 12 to 14.

Operations for making an update request will be described first with reference to Fig. 12.

Firstly, in response to a request from a management administrator that is to make an update request, the information terminal 113a, 113b, or 113c boots the update request program 117 and creates the update request information 119 by using the update request information generation means 117a (S22 in Fig. 12). After finishing the creation, the information terminal 113a, 113b, or 113c sends the update request information 119 to the assemblable mount management system 100 through the network 111 by using the update request information sending means 117b (S23 in Fig. 12).

The control unit 102 of the assemblable mount management system 100 boots the information update program 109 and receives the update request information 119 (S24 in Fig. 12). Moreover, the control unit 102 checks the authority of the management administrator making the update request by referring to the access authority information 108 (S25 in Fig. 12). Based on the checked authority, the control unit 102 determines whether the update is possible, proceeds to S27 if the update is impossible, and proceeds to S28 if the update is possible (S26 in Fig. 12). Whether the update is possible is determined simply by referring to the access authority information 108 and determining whether the update requester included in the update request information 119 has the authority to update the target requested to be updated.

If determining that the update is impossible, the control unit 102 rejects the update and makes a return (S27 in Fig. 12). In this case, the control unit 102 does not update the parts management information 103. In the case of rejecting the update, the control unit 102 sends information indicating that the update has been rejected and the reason of the rejection, e.g., information indicating that the requester does not have the update authority, as necessary to the one of the information terminals 113a to 113c that sent the update request information 119.

If determining that the update is possible, the control unit 102 updates the parts management information 103 based on the update request information 119 (S28 in Fig. 12).

In the case of updating the parts management information 103, the control unit 102 determines whether the number of assemblable mounts 1 in inventory changes, proceeds to S30 if the number in inventory changes, and proceeds to S31 if the number in inventory does not change (S29 in Fig. 12).

If the number of assemblable mounts 1 in inventory changes, the control unit 102 updates the inventory information 107 based on the changed number. Specifically, the control unit 102 increases or decreases the number in inventory by the increased or decreased number in inventory (S30 in Fig. 12).

Lastly, the control unit 102 sends the updated parts management information 103 and inventory information 107 to all management administrators having the browse authority as necessary (S31 in Fig. 12). The specific contents of the update may be sent as the updated parts management information 103 and inventory information 107. With this configuration, other management administrators do not have to access the assemblable mount management system 100 to browse the contents of the update. This eases the burden of monitoring updates on the other management administrators.

Incidentally, only information indicating that there has been an update may be sent. This configuration eases the burden of communication when there are many management administrators having the browse authority.

The above is description of the operations for making an update request.

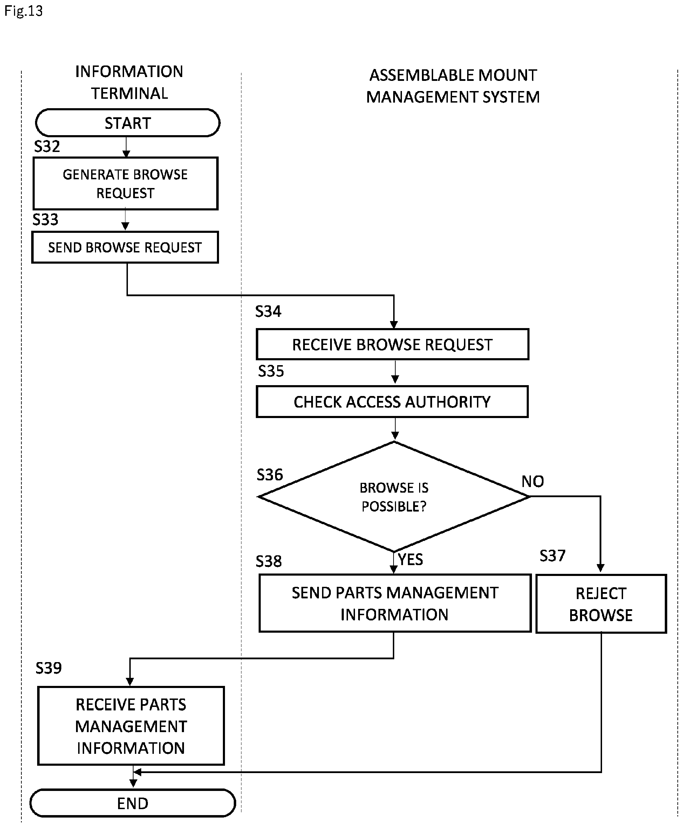

Operations for making a browse request will be described next with reference to Fig. 13.

Firstly, in response to a request from a management administrator that is to make a browse request, the information terminal 113a, 113b, or 113c boots the browse request program 116 and creates the browse request information 120 by using the browse request information generation means 116a (S32 in Fig. 13). After finishing the creation, the information terminal 113a, 113b, or 113c sends the browse request information 120 to the assemblable mount management system 100 through the network 111 by using the browse request information sending means 116b (S33 in Fig. 13).

The control unit 102 of the assemblable mount management system 100 boots the information update program 109 and receives the browse request information 120 (S34 in Fig. 13). Moreover, the control unit 102 checks the authority of the management administrator making the browse request by referring to the access authority information 108 (S35 in Fig. 13). Based on the checked authority, the control unit 102 determines whether the browse is possible, proceeds to S37 if the browse is impossible, and proceeds to S38 if the browse is possible (S36 in Fig. 13). Whether the browse is possible is determined simply by referring to the access authority information 108 and determining whether the browse requester included in the browse request information 120 has the authority to browse the target requested to be browsed.

If determining that the browse is impossible, the control unit 102 rejects the browse and makes a return (S37 in Fig. 13). In this case, the control unit 102 sends information indicating that the browse has been rejected and the reason of the rejection, e.g., information indicating that the requester does not have the browse authority, as necessary to the one of the information terminals 113a to 113c that sent the browse request information 120.

If determining that the browse is possible, the control unit 102 sends the parts management information 103 requested to be browsed to the one of the information terminals 113a to 113c to which the browse request information 120 was sent, based on the browse request information 120 (S38 in Fig. 12). Note that the sending of the parts management information 103 here includes permitting only display of an image representing the parts management information 103 on the screen of the information terminal 113a, 113b, or 113c and prohibiting saving of the parts management information 103 to the information terminal 113a, 113b, or 113c.

Lastly, the information terminal 113a, 113b, or 113c receives the parts management information 103 by using the parts management information reception means 116c (S39 in Fig. 13).

The above is description of the operations for making a browse request.

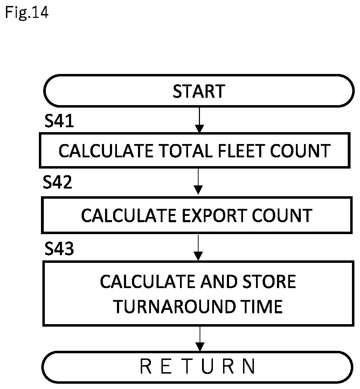

Next, a procedure of calculating a turnaround time based on the turnaround time calculation program 110 will be described with reference to Fig. 14.

First of all, the control unit 102 boots the turnaround time calculation program 110 in advance. Note that the timing to boot the turnaround time calculation program 110 is, for example, after the elapse of a unit time. Then, the control unit 102 derives the total fleet count from the parts management information 103 and stores it in the storage unit 101 (S41 in Fig. 14).

Then, the control unit 102 refers to the parts management information 103, calculates the export count, and stores it in the storage unit 101 (S42 in Fig. 14).

Then, the control unit 102 adds a value obtained by dividing the total fleet count by the export count to the mount turnaround time information 107a as the turnaround time in the last unit period, and stores it in the storage unit 101 (S43 in Fig. 14).

The above is description of the procedure of calculating the turnaround time based on the turnaround time calculation program 110.

As described above, the assemblable mount management system 100 in the present embodiment has the parts management information 103 on transport of coiled objects 2 using assemblable mounts 1. The parts management information 103 is updated as requested by management administrators which are parties responsible for management target steps.

Thus, if a coiled object 2 is damaged during the transport, the cause of the damage can be easily specified by referring to the parts management information 103 and checking the condition of each part in each completed management target step.

While the present invention has been described above based on an embodiment, the present invention is not limited to the embodiment. Those skilled in the art can naturally arrive at various modifications and improvements within the scope of the technical idea of the present invention, and these are also included in the present invention.

For example, in the embodiment described above, a structure consisting solely of a seat 3 and supports 4 is exemplarily illustrated as each assemblable mount 1, but the number and types of constituent parts can be selected as appropriate as long as the assemblable mount 1 is an assemblable type and repetitively usable.

Also, in the embodiment described above, the assemblable mount management system 100 manages only one type of assemblable mount 1, but the assemblable mount management system 100 can also manage a plurality of types of assemblable mounts 1 with different shapes and materials.

### [REFERENCE SIGNS LIST]

- 1: assemblable mount
- 2: coiled object
- 3: seat
- 4: support
- 4a: support surface
- 4b: recess
- 5: housing box
- 6: transport container
- 71: cracked surface
- 100: assemblable mount management system
- 101: storage unit
- 102: control unit
- 103: parts management information
- 104: progress information
- 105: parts information
- 107: inventory information
- 107a: mount turnaround time information
- 108: access authority information
- 109: information update program
- 110: turnaround time calculation program
- 111: network
- 112: repeater
- 113a: information terminal
- 113b: information terminal
- 113c: information terminal
- 114: terminal control unit
- 115: terminal storage unit
- 116: browse request program
- 116a: browse request information generation means
- 116b: browse request information sending means
- 116c: parts management information reception means
- 117: update request program
- 117a: update request information generation means
- 117b: update request information sending means
- 119: update request information
- 120: browse request information
- 301: mount number information
- 302: mount name information
- 303: coil type information
- 304: transport destination information
- 305: progress status information
- 306: management administrator information
- 501: image information
- 502: rental information

## Claims

1. An assemblable mount (100) management system that is for use in management of repetitively used assemblable mounts (1) in a physical distribution in which coiled objects (2) are mounted on the assemblable mounts (1), housed in transport containers (6), and transported, and that is connected to an information terminal (113a, 113b, 133c) through a network (111), wherein the assemblable mount management system (100) comprises:
a storage unit (101) storing
parts management information (103) including
progress information (104) indicating ongoing and completed management target steps among a plurality of management target steps which are pre-defined steps starting from ordering of manufacture of parts of the assemblable mounts (1) through repetitive use of the assemblable mounts (1) to discard of the assemblable mounts (1) after breakage, and
parts information (105) indicating conditions of the parts in the completed management target steps, and
and
a control unit (102) that, in response to receiving, from the information terminal (113a, 113b, 113c), update request information (119) including information indicating the management administrator requesting to update the parts management information (103) and a content of the update, updates the parts management information (103) , **characterized in that**
the storage unit (101) further storing access authority information (108) indicating an authority to browse and update the parts management information (103) from a management administrator of one of the management target steps through the information terminal (113a, 113b, 113c);.
and the control unit (102) updates the parts management information (103) within a limit of the authority of the management administrator requesting the update indicated in the access authority information (108).

2. The assemblable mount management system (100) according to claim 1, wherein, for each of the parts forming the assemblable mounts (1), the progress information (104) has information indicating:
a type of the coiled object (2) to be transported on the assemblable mount (1);
a transport source and a transport destination of the coiled object (2);
the ongoing management target steps; and
the management administrators of the management target steps.

3. The assemblable mount management system (100) according to claim 1 or 2, wherein
the management target steps include:
a mount ordering step of ordering the assemblable mounts (1) for exporting the coiled objects (2);
a parts ordering step of ordering the parts of the assemblable mounts (1);
a parts delivery step of delivering the parts manufactured;
a step of packaging the assemblable mounts (1);
a delivery step of delivering the packaged assemblable mounts (1);
a coil mounting step of mounting the coiled objects (2) onto the assemblable mounts (1) and loading the coiled objects (2) and the assemblable mounts (1) into the transport containers (6);
a transport step of transporting the transport containers (6) loaded with the coiled objects (2) to a transport destination;
a return step of returning the assemblable mounts (1) after the transport step;
an inspection step of inspecting whether the assemblable mounts (1) after the return step are reusable;
a storage step of storing the assemblable mounts (1) determined to be reusable in the inspection step in inventory; and
a discard step of discarding the assemblable mounts (1) determined to be not reusable in the inspection step.

4. The assemblable mount management system (100) according to claim 3, wherein
the transport step includes:
an embarkation port land transport step of transporting the transport containers (6) after the coil mounting step to an embarkation port by land;
an export customs clearance step of clearing customs for exporting the coiled objects (2);
a sea transport step of transporting the transport containers (6) loaded with the coiled objects (2) from an exporting country to an importing country by sea;
an import customs clearance step of clearing customs for importing the transport containers (6) loaded with the coiled objects (2); and
an importer land transport step of transporting the coiled objects (2) to an importer in the importing country by land, and
the return step includes:
a collection-storage step of disassembling and collecting the assemblable mounts (1) after the transport step and storing the assemblable mounts (1) in the importing country of the coiled objects (2) until a preparation for return is completed;
an embarkation port return step of returning the assemblable mounts (1) to an embarkation port;
an import destination customs clearance step of clearing customs for returning the assemblable mounts (1) in the importing country of the coiled objects (2);
a sea return step of returning the assemblable mounts (1) from the importing country of the coiled objects (2) to the exporting country thereof by sea transport;
an export source return customs clearance step of clearing customs for return in the exporting country of the coiled objects (2); and
a land return step of returning the coiled objects (2) by land in the exporting country of the coiled objects (2).

5. The assemblable mount management system (100) according to any one of claims 1 to 4, wherein the parts information (105) has image information (501) indicating an exterior of each of the parts forming the assemblable mount (1) in each of the completed management target steps.

6. The assemblable mount management system (100) according to claim 5, wherein the parts information (105) has rental information (502) which is information on rental of each of the parts forming the assemblable mount (1) in each of the completed management target steps.

7. The assemblable mount management system (100) according to any one of claims 1 to 6, wherein if updating the parts management information (103), the control unit (102) sends information indicating a result of the update through the information terminal (113a, 113b, 113c) to a management administrator having an authority to browse the parts management information (103).

8. The assemblable mount management system (100) according to claim 3, wherein
the storage unit (101) stores inventory information (107) indicating the number of the assemblable mounts (1) in inventory stored in a reusable condition after being returned among the assemblable mounts (1),
the access authority information (108) includes information indicating a browse authority of each of management administrators that request through the information terminal (113a, 113b, 113c) to obtain the inventory information (107), and
the control unit (102) extracts the assemblable mount (1) in the parts management information (103) stored in a reusable condition after being returned, and stores the number of the extracted assemblable mounts (1) as the number in inventory in the inventory information (107).

9. The assemblable mount management system (100) according to any one of claims 1 to 8, wherein the control unit (102) calculates a mount turnaround time being a period of time required for all of the assemblable mounts (1) stored in the parts management information (103) to be returned once in the course of transporting of the coiled objects (2), and stores the calculated time as mount turnaround time information (107a).

10. The assemblable mount management system (100) according to claim 3, wherein
the mount ordering step among the management target steps has an order placement request step of requesting placement of an order, and an order placement approval step of approving the placement of the order, and
the access authority information (108) is information in which an authority to update the order placement request step and an authority to update the order placement approval step are granted to different persons in charge in a business operator being the management administrator of the mount ordering step.

11. The assemblable mount management system (100) according to any one of claims 1 to 10, wherein when information as a request to browse the parts management information and browse request information which is information including the management administrator making the browse request are sent from the management administrator through the information terminal (113a, 113b, 133c), the control unit (102) sends the information terminal (113a, 113b, 113c) the parts management information (103) within the limit of the authority of the management administrator making the browse request indicated in the access authority information (108).

12. An information terminal (113a, 113b, 113c) connected to the assemblable mount management system (100) according to any one of claims 1 to 11 through a network (111), the information terminal (113a, 113b, 113c) comprising:
update request information generation means (117a) for generating the update request information (119); and
update request information sending means (117b) for sending the generated update request information (119).

13. An information terminal (113a, 113b, 113c) connected to the assemblable mount management system (100) according to claim 11 through a network (111), the information terminal (113a, 113b, 113c) comprising:
browse request information generation means (116a) for generating the browse request information (120);
browse request information sending means (116a) for sending the generated browse request information (120); and
parts management information reception means (116c) for receiving the parts management information (103) sent from the assemblable mount management system (100) when browse is permitted.

14. A program which causes a computer to operate as the assemblable mount management system (100) according to any one of claims 1 to 11.

15. A program which causes a computer to operate as the information terminal (113a, 113b, 113c) according to claim 12 or 13.

## Patentansprüche

1. Verwaltungssystem (100) für zusammenbaubare Halterungen, das zur Verwaltung von wiederholt verwendbaren zusammenbaubaren Halterungen (1) in einer physischen Verteilung dient, bei der gewickelte Gegenstände (2) auf den zusammenbaubaren Halterungen (1) befestigt, in Transportbehältern (6) untergebracht und transportiert werden, und das mit einem Informationsterminal (113a, 113b, 113c) über ein Netzwerk (111) verbunden ist, wobei das Verwaltungssystem (100) für zusammenbaubare Halterungen umfasst:
eine Speichereinheit (101), die
Teileverwaltungsinformationen (103), einschließlich
Fortschrittsinformationen (104) speichert, die laufende und abgeschlossene Verwaltungszielschritte unter einer Vielzahl von Verwaltungszielschritten angeben, bei denen es sich um vordefinierte Schritte handelt, die von der Bestellung der Herstellung von Teilen der zusammenbaubaren Halterungen (1) über die wiederholte Verwendung der zusammenbaubaren Halterungen (1) bis zur Entsorgung der zusammenbaubaren Halterungen (1) nach einem Bruch reichen, und
Teileinformationen (105), die den Zustand der Teile in den abgeschlossenen Verwaltungszielschritten angeben,
und
eine Steuereinheit (102), die als Reaktion auf den Empfang von Aktualisierungsanforderungsinformationen (119) vom Informationsterminal (113a, 113b, 113c) einschließlich der Informationen, welche den Verwaltungsadministrator, der die Aktualisierung der Teileverwaltungsinformationen (103) anfordert, sowie den Inhalt der Aktualisierung angeben, die Teileverwaltungsinformationen (103) aktualisieren, **dadurch gekennzeichnet, dass**
die Speichereinheit (101) ferner Zugriffsberechtigungsinformationen (108) speichert, die eine Berechtigung zum Durchsuchen und Aktualisieren der Teileverwaltungsinformationen (103) durch einen Verwaltungsadministrator eines der Verwaltungszielschritte über das Informationsterminal (113a, 113b, 113c) angeben;
und die Steuereinheit (102), welche Teileverwaltungsinformationen (103) innerhalb der Grenzen der Berechtigung des Verwaltungsadministrators aktualisiert, der die Aktualisierung wie in den Zugriffsberechtigungsinformationen (108) angegeben anfordert.

2. Verwaltungssystem (100) für zusammenbaubare Halterungen gemäß Anspruch 1, wobei die Fortschrittsinformationen (104) für jedes der Teile, welche die zusammenbaubaren Halterungen (1) bilden, Informationen aufweisen, die angeben:
einen Typ des auf der zusammenbaubaren Halterung (1) zu transportierenden, gewickelten Gegenstands (2);
eine Transportquelle und einen Transportziel des gewickelten Gegenstands (2);
die laufenden Verwaltungszielschritte; und
die Verwaltungsadministratoren der Verwaltungszielschritte.

3. Verwaltungssystem (100) für zusammenbaubare Halterungen gemäß Anspruch 1 oder 2, wobei
die Verwaltungszielschritte umfassen:
einen Halterungsbestellschritt zum Bestellen der zusammenbaubaren Halterungen (1) zum Ausgeben der gewickelten Gegenstände (2);
einen Teilebestellschritt zum Bestellen der Teile der zusammenbaubaren Halterungen (1);
einen Teilelieferungsschritt, bei dem die gefertigten Teile geliefert werden;
einen Schritt zum Verpacken der zusammenbaubaren Halterungen (1);
einen Auslieferungsschritt zur Auslieferung der verpackten zusammenbaubaren Halterungen (1);
einen Wickel-Befestigungsschritt zum Befestigen der gewickelten Gegenstände (2) auf den zusammenbaubaren Halterungen (1) und zum Einbringen der gewickelten Gegenstände (2) und der zusammenbaubaren Halterungen (1) in die Transportbehälter (6);
einen Transportschritt zum Transportieren der mit den gewickelten Gegenständen (2) beladenen Transportbehälter (6) zu einem Transportziel;
einen Rückgabeschritt zum Zurückgeben der zusammenbaubaren Halterungen (1) nach dem Transportschritt;
einen Prüfschritt zum Prüfen, ob die zusammenbaubaren Halterungen (1) nach dem Rückgabeschritt wiederverwendbar sind;
einen Lagerschritt, bei dem die im Prüfschritt als wiederverwendbar eingestuften zusammenbaubaren Halterungen (1) im Bestand gelagert werden; und
ein Entsorgungsschritt, bei dem die im Prüfschritt als nicht wiederverwendbar eingestuften zusammenbaubaren Halterungen (1) entsorgt werden.

4. Verwaltungssystem (100) für zusammenbaubare Halterungen gemäß Anspruch 3, wobei
der Transportschritt umfasst:
einen Einschiffungshafen-Landtransportschritt, bei dem die Transportbehälter (6) nach dem Wickel-Befestigungsschritt auf dem Landweg zu einem Verschiffungshafen transportiert werden;
einen Exportzollabfertigungsschritt, bei dem die gewickelten Gegenstände (2) für den Export einer Zollabfertigung unterzogen werden;
einen Seetransportschritt zum Transport der Transportbehälter (6), in die die gewickelten Gegenstände (2) eingebracht sind, auf dem Seeweg von einem Ausfuhrland in ein Einfuhrland;
einen Importzollabfertigungsschritt zur Zollabfertigung der mit den gewickelten Gegenständen (2) versehenen Transportbehälter (6) für den Import; und
einen Importeur-Landtransportschritt, bei dem die gewickelten Gegenstände (2) auf dem Landweg zu einem Importeur im Importland transportiert werden, und
wobei der Rückgabeschritt umfasst:
einen Sammel- und Lagerschritt, bei dem die zusammenbaubaren Halterungen (1) nach dem Transportschritt zerlegt und gesammelt werden und die zusammenbaubaren Halterungen (1) im Einfuhrland der gewickelten Gegenstände (2) gelagert werden, bis die Vorbereitungen für den Rückgabe abgeschlossen sind;
einen Verschiffungshafen-Rückgabeschritt, bei dem die zusammenbaubaren Halterungen (1) zu einem Verschiffungshafen zurücktransportiert werden;
einen Importziel-Zollabfertigungsschritt, bei dem die zusammenbaubaren Halterungen (1) im Einfuhrland der gewickelten Gegenstände (2) für die Rückgabe verzollt werden;
einen Seeweg-Rücktransportschritt, bei dem die zusammenbaubaren Halterungen (1) vom Einfuhrland der gewickelten Gegenstände (2) per Seetransport in deren Ausfuhrland zurücktransportiert werden;
einen Exportquellen-Zollabfertigungsschritt, bei dem die Zollabfertigung für die Rückgabe in das Ausfuhrland der gewickelten Gegenstände (2) erfolgt; und
einen Landweg-Rückgabeschritt, bei dem die gewickelten Gegenstände (2) im Ausfuhrland der gewickelten Gegenstände (2) auf dem Landweg zurücktransportiert werden.

5. Verwaltungssystem (100) für zusammenbaubare Halterungen gemäß einem der Ansprüche 1 bis 4, wobei die Teileinformationen (105) Bildinformationen (501) enthalten, die eine Außenansicht jedes der Teile anzeigen, aus denen die zusammenbaubare Halterung (1) in jedem der abgeschlossenen Verwaltungszielschritte gebildet ist.

6. Verwaltungssystem (100) für zusammenbaubare Halterungen gemäß Anspruch 5, wobei die Teileinformationen (105) Mietinformationen (502) umfassen, bei denen es sich um Informationen zur Vermietung jedes der Teile handelt, die die zusammenbaubare Halterung (1) in jedem der abgeschlossenen Verwaltungszielschritte bilden.

7. Verwaltungssystem (100) für zusammenbaubare Halterungen gemäß einem der Ansprüche 1 bis 6, wobei die Steuereinheit (102) bei einer Aktualisierung der Teileverwaltungsinformationen (103) Informationen, die ein Ergebnis der Aktualisierung angeben, über das Informationsterminal (113a, 113b, 113c) an einen Verwaltungsadministrator sendet, der berechtigt ist, die Teileverwaltungsinformationen (103) einzusehen.

8. Verwaltungssystem (100) für zusammenbaubare Halterungen gemäß Anspruch 3, wobei
die Speichereinheit (101) Bestandsinformationen (107) speichert, die die Anzahl der zusammenbaubaren Halterungen (1) im Bestand angeben, die nach ihrer Rückgabe in wiederverwendbarem Zustand gelagert werden,
die Zugriffsberechtigungsinformationen (108) Informationen enthalten, die eine Abfrageberechtigung jedes Verwaltungsadministrators angeben, der eine Anforderung über das Informationsterminal (113a, 113b, 113c) zum Erhalt von Bestandsinformationen (107) versendet, und
die Steuereinheit (102) die zusammenbaubare Halterung (1) aus den Teileverwaltungsinformationen (103) extrahiert, die nach der Rückgabe in einem wiederverwendbaren Zustand gespeichert sind, und die Anzahl der extrahierten zusammenbaubaren Halterungen (1) als Bestandsanzahl in den Bestandsinformationen (107) speichert.

9. Verwaltungssystem (100) für zusammenbaubare Halterungen gemäß einem der Ansprüche 1 bis 8, wobei die Steuereinheit (102) eine Durchlaufzeit der Halterungen berechnet, die der Zeitraum ist, der erforderlich ist, bis alle in den Teileverwaltungsinformationen (103) gespeicherten zusammenbaubaren Halterungen (1) im Verlauf des Transports der gewickelten Gegenstände (2) einmal zurückgegeben wurden, und die berechnete Zeit als Halterungsdurchlaufzeitinformation (107a) speichert.

10. Verwaltungssystem (100) für zusammenbaubare Halterungen gemäß Anspruch 3, wobei
der Halterungsbestellschritt unter den Verwaltungszielschritten einen Schritt zur Anforderung einer Bestellung, bei dem die Aufgabe einer Bestellung angefordert wird, und einen Schritt zur Genehmigung der Bestellung, bei dem die Aufgabe der Bestellung genehmigt wird, umfasst, und
die Zugriffsberechtigungsinformationen (108) Informationen sind, in denen die Berechtigung zur Aktualisierung des Schritts zur Anforderung einer Bestellung und die Berechtigung zur Aktualisierung des Schritts zur Genehmigung der Bestellung verschiedenen Verantwortlichen innerhalb eines Unternehmers gewährt werden, der als Verwaltungsadministrator für den Halterungsbestellschritt fungiert.

11. Verwaltungssystem (100) für zusammenbaubare Halterungen gemäß einem der Ansprüche 1 bis 10, wobei die Steuereinheit (102) dem Informationsterminal (113a, 113b, 113c) die Teileverwaltungsinformationen (103) innerhalb der Zugriffsberechtigungs-Grenzen des Verwaltungsadministrators übermittelt, der die Abfrageanforderung stellt, wie in den Zugriffsberechtigungsinformationen (108) angegeben, wenn Informationen als Anfrage zum Abrufen der Teileverwaltungsinformationen und Abrufanfrageinformationen, bei denen es sich um Informationen handelt, die den Verwaltungsadministrator enthalten, der die Abrufanfrage stellt, vom Verwaltungsadministrator über das Informationsterminal (113a, 113b, 113c) gesendet werden.

12. Informationsterminal (113a, 113b, 113c), das über ein Netzwerk (111) mit dem Verwaltungssystem für zusammenbaubare Halterungen (100) gemäß einem der Ansprüche 1 bis 11 verbunden ist, wobei das Informationsterminal (113a, 113b, 113c) umfasst:
eine Einrichtung (117a) zur Erzeugung von Aktualisierungsanforderungsinformationen (119); und
eine Einrichtung (117b) zum Senden von Aktualisierungsanforderungsinformationen zum Senden der erzeugten Aktualisierungsanforderungsinformationen (119).

13. Informationsterminal (113a, 113b, 113c), das über ein Netzwerk (111) mit dem Verwaltungssystem (100) für zusammenbaubare Halterungen gemäß Anspruch 11 verbunden ist, wobei das Informationsterminal (113a, 113b, 113c) umfasst:
eine Einrichtung (116a) zur Erzeugung von Suchanfrage-Informationen zur Erzeugung der Suchanfrage-Informationen (120);
eine Einrichtung (116a) zum Senden von Suchanfrageinformationen zum Senden der erzeugten Suchanfrageinformationen (120); und
eine Einrichtung (116c) zum Empfangen von Teileverwaltungsinformationen, die die vom Verwaltungssystem für zusammenbaubare Halterungen (100) gesendeten Teileverwaltungsinformationen (103) empfängt, wenn eine Suche zulässig ist.

14. Programm, das einen Computer veranlasst, als Verwaltungssystem für zusammenbaubare Halterungen (100) gemäß einem der Ansprüche 1 bis 11 zu arbeiten.

15. Programm, das einen Computer veranlasst, als Informationsterminal (113a, 113b, 113c) gemäß Anspruch 12 oder 13 zu arbeiten.

## Revendications

1. Système (100) de gestion de supports assemblables qui est destiné à être utilisé dans la gestion de supports assemblables (1) utilisés de manière répétitive dans une distribution physique dans laquelle des objets enroulés (2) sont montés sur les supports assemblables (1), logés dans des conteneurs de transport (6) et transportés, et qui est connecté à un terminal informatique (113a, 113b, 133c) par le biais d'un réseau (111), dans lequel le système (100) de gestion de supports assemblables comprend :
une unité de stockage (101) stockant des informations de gestion de pièces (103) incluant
des informations de progression (104) indiquant des étapes cibles de gestion en cours et terminées parmi une pluralité d'étapes cibles de gestion qui sont des étapes prédéfinies allant de la commande de fabrication de pièces des supports assemblables (1), en passant par l'utilisation répétitive des supports assemblables (1), à la mise au rebut des supports assemblables (1) une fois endommagés, et
des informations de pièces (105) indiquant les conditions des pièces dans les étapes cibles de gestion terminées, et
et
une unité de commande (102) qui, en réponse à la réception, en provenance du terminal informatique (113a, 113b, 113c), d'informations de demande de mise à jour (119) incluant des informations indiquant l'administrateur de gestion demandant de mettre à jour les informations de gestion de pièces (103) et un contenu de la mise à jour, met à jour les informations de gestion de pièces (103), **caractérisé en ce que**
l'unité de stockage (101) stockant en outre des informations d'autorité d'accès (108) indiquant une autorité pour consulter et mettre à jour les informations de gestion de pièces (103) provenant d'un administrateur de gestion de l'une des étapes cibles de gestion par l'intermédiaire du terminal informatique (113a, 113b, 113c) ;
et l'unité de commande (102) met à jour les informations de gestion de pièces (103) dans les limites de l'autorité de l'administrateur de gestion demandant la mise à jour indiquée dans les informations d'autorité d'accès (108).

2. Système (100) de gestion de supports assemblables selon la revendication 1, dans lequel, pour chacune des pièces formant les supports assemblables (1), les informations de progression (104) présentent des informations indiquant :
un type de l'objet enroulé (2) à transporter sur le support assemblable (1) ;
une source de transport et une destination de transport de l'objet enroulé (2) ;
les étapes cibles de gestion en cours ; et
les administrateurs de gestion des étapes cibles de gestion.

3. Système (100) de gestion de supports assemblables selon la revendication 1 ou 2, dans lequel
les étapes cibles de gestion incluent :
une étape de commande de supports pour commander les supports assemblables (1) afin d'exporter les objets enroulés (2) ;
une étape de commande de pièces pour commander les pièces des supports assemblables (1) ;
une étape de livraison de pièces pour livrer les pièces fabriquées ;
une étape de conditionnement des supports assemblables (1) ;
une étape de livraison pour livrer les supports assemblables (1) conditionnés ;
une étape de montage de bobine pour monter les objets enroulés (2) sur les supports assemblables (1) et charger les objets enroulés (2) et les supports assemblables (1) dans les conteneurs de transport (6) ;
une étape de transport pour transporter les conteneurs de transport (6) chargés des objets enroulés (2) vers une destination de transport ;
une étape de retour pour renvoyer les supports assemblables (1) après l'étape de transport ;
une étape d'inspection pour vérifier si les supports assemblables (1) sont réutilisables après l'étape de retour ;
une étape de stockage pour stocker dans un inventaire les supports assemblables (1) déterminés comme étant réutilisables à l'étape d'inspection ; et
une étape de mise au rebut pour mettre au rebut les supports assemblables (1) déterminés comme n'étant pas réutilisables à l'étape d'inspection.

4. Système (100) de gestion de supports assemblables selon la revendication 3, dans lequel l'étape de transport inclut :
une étape de transport terrestre vers un port d'embarquement pour transporter les conteneurs de transport (6) après l'étape de montage de bobine vers un port d'embarquement par voie terrestre ;
une étape de dédouanement à l'exportation pour dédouaner pour l'exportation les objets enroulés (2) ;
une étape de transport maritime pour transporter par voie maritime les conteneurs de transport (6) chargés des objets enroulés (2) d'un pays exportateur à un pays importateur ;
une étape de dédouanement à l'importation pour dédouaner pour l'importation les conteneurs de transport (6) chargés des objets enroulés (2) ; et
une étape de transport terrestre vers un importateur pour transporter par voie terrestre les objets enroulés (2) vers un importateur dans le pays importateur, et
l'étape de retour inclut :
une étape de collecte-stockage pour démonter et collecter les supports assemblables (1) après l'étape de transport et stocker les supports assemblables (1) dans le pays importateur des objets enroulés (2) jusqu'à l'achèvement d'une préparation de retour ;
une étape de retour au port d'embarquement pour renvoyer les supports assemblables (1) à un port d'embarquement ;
une étape de dédouanement à destination d'importation pour dédouaner pour le retour les supports assemblables (1) dans le pays importateur des objets enroulés (2) ;
une étape de retour par voie maritime pour renvoyer par transport maritime les supports assemblables (1) du pays importateur des objets enroulés (2) au pays exportateur de ceux-ci ;
une étape de dédouanement de retour à la source d'exportation pour dédouaner pour le retour dans le pays exportateur des objets enroulés (2) ; et
une étape de retour par voie terrestre pour renvoyer les objets enroulés (2) par voie terrestre dans le pays exportateur des objets enroulés (2).

5. Système (100) de gestion de supports assemblables selon l'une quelconque des revendications 1 à 4, dans lequel les informations de pièces (105) présentent des informations d'image (501) indiquant un extérieur de chacune des pièces formant le support assemblable (1) dans chacune des étapes cibles de gestion terminées.

6. Système (100) de gestion de supports assemblables selon la revendication 5, dans lequel les informations de pièces (105) présentent des informations de location (502) qui sont des informations concernant la location de chacune des pièces formant le support assemblable (1) dans chacune des étapes cibles de gestion terminées.

7. Système (100) de gestion de supports assemblables selon l'une quelconque des revendications 1 à 6, dans lequel, en cas de mise à jour des informations de gestion de pièces (103), l'unité de commande (102) envoie des informations indiquant un résultat de la mise à jour par l'intermédiaire du terminal informatique (113a, 113b, 113c) à un administrateur de gestion ayant l'autorité de consulter les informations de gestion de pièces (103).

8. Système (100) de gestion de supports assemblables selon la revendication 3, dans lequel
l'unité de stockage (101) stocke des informations d'inventaire (107) indiquant, parmi les supports assemblables (1), le nombre des supports assemblables (1) en stock stockés dans un état réutilisable après avoir été renvoyés,
les informations d'autorité d'accès (108) incluent des informations indiquant une autorité de consultation de chacun des administrateurs de gestion qui demandent via le terminal informatique (113a, 113b, 113c) l'obtention des informations d'inventaire (107), et
l'unité de commande (102) extrait le support assemblable (1) dans les informations de gestion de pièces (103) stocké dans un état réutilisable une fois renvoyé, et stocke le nombre des supports assemblables (1) extraits comme étant le nombre en stock dans les informations d'inventaire (107).

9. Système (100) de gestion de supports assemblables selon l'une quelconque des revendications 1 à 8, dans lequel l'unité de commande (102) calcule un temps de rotation de supports qui est une durée temporelle requise pour que tous les supports assemblables (1) stockés dans les informations de gestion de pièces (103) soient renvoyés une fois dans le processus de transport des objets enroulés (2), et stocke le temps calculé en tant qu'informations de temps de rotation de supports (107a).

10. Système (100) de gestion de supports assemblables selon la revendication 3, dans lequel
l'étape de commande de supports, parmi les étapes cibles de gestion, présente une étape de demande de passation de commande pour demander la passation d'une commande et une étape d'approbation de passation de commande pour approuver la passation de la commande, et
les informations d'autorité d'accès (108) sont des informations dans lesquelles une autorité de mise à jour de l'étape de demande de passation de commande et une autorité de mise à jour de l'étape d'approbation de passation de commande sont accordées à différentes personnes en charge dans un opérateur économique, qui est l'administrateur de gestion de l'étape de commande de supports.

11. Système (100) de gestion de supports assemblables selon l'une quelconque des revendications 1 à 10, dans lequel, lorsque des informations sous forme de demande de consultation des informations de gestion de pièces et de consultation des informations de demande, qui sont des informations incluant l'administrateur de gestion effectuant la demande de consultation, sont envoyées de l'administrateur de gestion par l'intermédiaire du terminal informatique (113a, 113b, 133c), l'unité de commande (102) envoie au terminal informatique (113a, 113b, 113c) les informations de gestion de pièces (103) dans les limites de l'autorité de l'administrateur de gestion effectuant la demande de consultation indiquée dans les informations d'autorité d'accès (108).

12. Terminal informatique (113a, 113b, 113c) connecté au système (100) de gestion de supports assemblables selon l'une quelconque des revendications 1 à 11 par l'intermédiaire d'un réseau (111), le terminal informatique (113a, 113b, 113c) comprenant :
des moyens (117a) de génération d'informations de demande de mise à jour pour générer les informations de demande de mise à jour (119) ; et
des moyens (117b) d'envoi d'informations de demande de mise à jour pour envoyer les informations de demande de mise à jour (119) générées.

13. Terminal informatique (113a, 113b, 113c) connecté au système (100) de gestion de supports assemblables selon la revendication 11 par l'intermédiaire d'un réseau (111), le terminal informatique (113a, 113b, 113c) comprenant :
des moyens (116a) de génération d'informations de demande de consultation pour générer les informations de demande de consultation (120) ;
des moyens (116a) d'envoi d'informations de demande de consultation pour envoyer les informations de demande de consultation (120) générées ; et
des moyens (116c) de réception d'informations de gestion de pièces pour recevoir les informations de gestion de pièces (103) envoyées à partir du système (100) de gestion de supports assemblables lorsque la consultation est autorisée.

14. Programme qui amène un ordinateur à fonctionner en tant que système (100) de gestion de supports assemblables selon l'une quelconque des revendications 1 à 11.

15. Programme qui amène un ordinateur à fonctionner en tant que terminal informatique (113a, 113b, 113c) selon la revendication 12 ou 13.
